# EUROPEAN PATENT APPLICATION

(11) **EP 3 530 347 A1**
(43) Date of publication of application: **28.08.2019**
(21) Application number: 17862213.0
(22) Date of filing: 22.02.2017
(51) Int. Cl.: B01F 11/02, B01F 3/04, B01F 5/02, B01F 5/06, B01F 13/10

(54) **METHOD FOR MANUFACTURING AND SYSTEM FOR MANUFACTURING BEVERAGE OR OTHER LIQUID CONTAINING BUBBLES**

(30) Priority: 19.10.2016 JP 2016205588; 28.10.2016 JP 2016212335; 30.11.2016 JP 2016233081; 22.12.2016 JP 2016248819; 13.01.2017 JP 2017004694; 03.02.2017 JP 2017019136
(71) Applicant: Tosslec Co., Ltd., Kyoto-city, Kyoto 601-8303 (JP)
(72) Inventor: NAKAO Junji, kyoto-shi Kyoto 601-8303 (JP)
(74) Representative: Horn Kleimann Waitzhofer Patentanwälte PartG mbB
(86) International application number: PCT/JP2017/006686
(87) International publication number: WO 2018/073987

(57) **Abstract**

A method for manufacturing beverage or other liquid containing bubbles uses a system for manufacturing bubble-containing liquid that includes: a bubble generating unit that generates fine bubbles in a liquid; a bubble collapsing unit that is connected to the bubble generating unit to collapse the fine bubbles contained in the bubble-containing liquid supplied from the bubble generating unit by making the bubble-containing liquid pass through the bubble collapsing unit and irradiating the bubble-containing liquid with ultrasonic wave; and a storage unit that is connected to the bubble collapsing unit to store the bubble-containing liquid supplied from the bubble collapsing unit. The method includes: a bubble generating step of generating the fine bubbles in the liquid by the bubble generating unit; a bubble collapsing step of generating superfine bubbles by forming an ultrasonic field by the bubble collapsing unit to collapse the fine bubbles contained in the liquid; and a storage step of storing the bubble-containing liquid containing the superfine bubbles by the storage unit. Consequently, beverage or other liquid containing the superfine bubbles can be manufactured.

## Description

### TECHNICAL FIELD

The present invention relates to a method and system for manufacturing beverage or other liquid containing bubbles.

### BACKGROUND ART

In recent years, bubble-containing liquid which contains bubbles (microbubble) having a particle diameter of micro-order or bubbles (nanobubble) having a particle diameter of nano-order has been attracting attention. People try to apply the bubble-containing liquid to various fields such as medical, agricultural, fishing eating/drinking, and fish farming industries. In the above described bubbles, some of them are also called as fine bubbles which have a feature of making the bubble-containing liquid cloudy by scattering visible light by the bubbles.

The bubbles capable of scattering visible light have a particle diameter of several tens micron. If the particle diameter of the bubbles becomes further smaller and becomes 200 nm or less, the particle diameter of the bubbles is smaller than a wavelength of visible light. In such a case, the bubble-containing liquid becomes transparent. When the particle diameter of the bubbles becomes 40 µm or less, the bubbles are negatively charged. Furthermore, it is particularly known that the bubbles having a particle diameter of 200 nm or less perform Brownian motion. The bubbles having a particle diameter of 1 µm or less are called as ultrafine bubbles.

As a method of generating the nanobubbles, a device for manufacturing nanobubble described in Patent Document 1 is known, for example. In the manufacturing device of nanobubble, microbubble-containing liquid is suppled to a liquid tank, the supplied bubble-containing liquid is irradiated with ultrasonic wave to collapse the microbubble and generate the nanobubble. Thus, nanobubble-containing liquid is manufactured.

### PRIOR ART DOCUMENTS

### [Patent Documents]

[Patent Document 1] Japanese Unexamined Patent Application Publication No. 2015-186781

### DISCLOSURE OF THE INVENTION

### [Problems to be Solved by the Invention]

However, in the above described manufacturing device of nanobubble described in Patent Document 1, although the bubble-containing liquid containing superfine bubbles having a constant particle diameter can be manufactured by forming an ultrasonic field for collapsing bubbles, it is difficult to control the ultrasonic vibrators for forming the ultrasonic field for collapsing bubbles when the capacity of the tank is large. Since the bubble-containing liquid of high concentration is manufactured by concentrating bubbles, a certain amount of time is required before a necessary amount of bubbles is generated in the tank. Thus, there is a problem that time delay occurs before supplying the bubble-containing liquid of a desired concentration.

The present invention aims for solving the above described problems and efficiently manufacturing beverage or other liquid containing bubbles (hereafter also referred to merely as "bubble-containing liquid") having a fine and constant particle diameter in high concentration.

### [Means for Solving the Problem]

(1) A method for manufacturing bubble-containing liquid is a method for manufacturing bubble-containing liquid using a system for manufacturing bubble-containing liquid, the system having: a bubble generating unit that generates a bubble-containing liquid; a bubble collapsing unit that is connected to the bubble generating unit to collapse the fine bubbles contained in the bubble-containing liquid supplied from the bubble generating unit by making the bubble-containing liquid pass through the bubble collapsing unit and irradiating the bubble-containing liquid with ultrasonic wave; and a storage unit that is connected to the bubble collapsing unit to store the bubble-containing liquid supplied from the bubble collapsing unit, the method having: a bubble generating step of generating the bubble-containing liquid containing bubbles in the liquid by the bubble generating unit; a bubble collapsing step of forming an ultrasonic field for collapsing bubbles by the bubble collapsing unit to collapse the fine bubbles contained in the bubble-containing liquid; and a storage step of storing the bubble-containing liquid by the storage unit.
   In the above described method for manufacturing bubble-containing liquid, the ultrasonic field for collapsing bubbles is formed in the passage in the bubble collapsing unit where the passage has a smaller diameter compared to the tank, and the fine bubbles are collapsed and converted into superfine bubbles having a smaller diameter when the bubble-containing liquid containing the fine bubbles generated in the bubble generating unit passes through the bubble collapsing unit. Then, the bubble-containing liquid containing the fine bubbles is stored in the storage unit and concentrated because the smaller bubbles are moved downward.
   Accordingly, strong ultrasonic field for collapsing bubbles is formed in the passage of the bubble-containing liquid in the bubble collapsing unit, the superfine bubbles having a constant diameter is generated rapidly, and the bubble-containing liquid are continuously and efficiently supplied to the storage unit while the superfine bubbles are not aggregated. Thus, the bubble-containing liquid is concentrated in the storage unit in a short time.
   Namely, in the above described method for manufacturing bubble-containing liquid, the collapsing and the storage are separately performed. Thus, the strong ultrasonic field for collapsing bubbles is generated to generate the superfine bubbles rapidly and the bubble-containing liquid containing the superfine bubbles is continuously and rapidly supplied to the storage unit. Consequently, the bubble-containing liquid can be concentrated in a short time.
(2) In the method for manufacturing bubble-containing liquid, it is preferred that the system for manufacturing bubble-containing liquid has a circulation path formed by the storage unit to recirculate the stored bubble-containing liquid to the bubble generating unit, and the bubble generating step, the bubble collapsing step and the storage step are repeated a plurality of times by using the circulation path.
   In the above described method for manufacturing bubble-containing liquid, the bubble-containing liquid is concentrated by circulating in the circulation path and stored in the storage unit. Consequently, the bubble-containing liquid is circulated and stored in the storage unit continuously and efficiently while the superfine bubbles are not aggregated. Thus, the bubble-containing liquid is concentrated in the storage unit in a short time.
(3) In the method for manufacturing bubble-containing liquid, it is preferred that the system for manufacturing bubble-containing liquid has a homogenization unit that homogenize the beverage, a bubble-containing beverage is generated as the bubble-containing liquid in the bubble generating step, and the method includes a beverage introducing step of introducing a beverage as the liquid and a homogenization step of homogenizing the bubble-containing beverage or the beverage containing the bubbles by introducing the bubble-containing beverage or the beverage containing the bubbles into the homogenization unit.
   In the above described method for manufacturing bubble-containing liquid, the gas introduced in the homogenization unit together with the beverage is crushed together with the particles contained in the beverage and the fine bubbles are generated. The generated fine bubbles are converted into the superfine bubbles having a smaller particle diameter by the collapsing of the ultrasonic wave. Accordingly, the bubble-containing beverage containing the fine bubbles is generated in the homogenization unit while the beverage is homogenized, and the bubble-containing liquid is collapsed by the ultrasonic wave. Thus, the bubble-containing beverage containing the superfine bubbles is efficiently manufactured.
(4) In the method for manufacturing bubble-containing liquid, it is preferred that the homogenization unit is incorporated in the circulation path, and the homogenization step is performed after the bubble generating step and before the bubble collapsing step.
   In the above described method for manufacturing bubble-containing liquid, the fine bubbles generated in the bubble generating step are crushed by the homogenization unit together with the particles contained in the liquid. Thus, the fine bubbles having a constant particle diameter are generated. Accordingly, the fine bubbles having a constant particle diameter are supplied to the bubble collapsing step. Thus, the collapsing of the ultrasonic wave is performed more efficiently and the bubble-containing liquid containing the superfine bubbles can be more efficiently manufactured.
(5) In the method for manufacturing bubble-containing liquid, it is preferred that the system for manufacturing bubble-containing liquid has a degassing unit that degasses the liquid, the method includes a degassing step of degassing dissolved oxygen from the bubble-containing liquid, and the fine bubbles of nitrogen gas are generated in the beverage in the bubble generating step after the degassing step.
   In the above described method for manufacturing bubble-containing liquid, after the oxygen dissolved in the beverage is degassed, the fine bubbles of the nitrogen gas are generated and the fine bubbles are converted into the superfine bubbles. Then, the bubble-containing liquid is stored. Accordingly, the dissolved oxygen is degassed and converted by the nitrogen. Thus, flavor component of the beverage can be maintained for a long time.
(6) In the method for manufacturing bubble-containing liquid, it is preferred that the degassing step is performed immediately after the homogenization step.
   In the above described method for manufacturing bubble-containing liquid, the degassing step is performed after high pressure is applied to the beverage and the beverage is heated to high temperature in the homogenization step. Thus, degassing performance is improved and the degassing can be performed efficiently.
(7) In the method for manufacturing bubble-containing liquid, it is preferred that the bubble collapsing unit has: a passage for passing the bubble-containing liquid; an outer body for covering a periphery of the passage; and a plurality of ultrasonic vibrators for irradiating the passage with the ultrasonic wave from an outside to an inside of the passage so that directions of irradiating the passage are different among the ultrasonic vibrators, a propagation liquid for propagating the ultrasonic wave is filled between the passage and the outer body, the ultrasonic vibrators are attached to an external side of the outer body, the bubble collapsing unit is arranged so that the passage is horizontally directed, and the method includes a cooling step of introducing the propagation liquid from a lower side of the outer body and discharging the propagation liquid from an upper side of the outer body in addition to the bubble collapsing step.
   By adopting the above described configuration, air can be prevented from entering a flow passage of the propagation liquid. Thus, the propagation liquid can surely transmit the ultrasonic wave and the propagation liquid can suppress heat generation caused by the collapsing of the ultrasonic wave to function as a cooling water. Thus, performance deterioration of the bubble collapsing unit can be suppressed.
(8) A system for manufacturing bubble-containing liquid has: a bubble generating unit that generates fine bubbles; a bubble collapsing unit that is connected to the bubble generating unit to collapse the fine bubbles contained in the bubble-containing liquid supplied from the bubble generating unit by making the bubble-containing liquid pass through the bubble collapsing unit and irradiating the bubble-containing liquid with ultrasonic wave; a storage unit that is connected to the bubble collapsing unit to store the bubble-containing liquid supplied from the bubble collapsing unit; and a circulation path that is incorporated with the bubble generating unit, the bubble collapsing unit and the storage unit.
   In the above described system for manufacturing bubble-containing liquid, the ultrasonic field for collapsing bubbles is formed in the passage of the bubble-containing liquid in the bubble collapsing unit, where the passage has a smaller diameter compared to the tank. Accordingly, the fine bubbles generated in the bubble generating unit are collapsed and converted into superfine bubbles having a smaller diameter when the bubble-containing liquid passes through the passage. Then, the bubble-containing liquid containing the fine bubbles is stored in the storage unit and concentrated because the smaller bubbles are moved downward.
   Accordingly, strong ultrasonic field for collapsing bubbles is formed in the passage of the bubble-containing liquid in the bubble collapsing unit, the superfine bubbles having a constant diameter is generated rapidly, and the bubble-containing liquid are continuously and efficiently supplied to the storage unit while the superfine bubbles are not aggregated. Thus, the bubble-containing liquid is concentrated in the storage unit in a short time.
   Namely, in the above described system for manufacturing bubble-containing liquid, the collapsing and the storage are separately performed. Thus, the strong ultrasonic field for collapsing bubbles is generated to generate the superfine bubbles rapidly and the bubble-containing liquid containing the superfine bubbles is continuously and rapidly supplied in the storage unit. Consequently, the bubble-containing liquid can be concentrated in a short time.
   Furthermore, the bubble-containing liquid is further concentrated by circulating in the circulation path and stored in the storage unit. Consequently, the bubble-containing liquid is circulated and stored in the storage unit continuously and efficiently while the superfine bubbles are not aggregated. Thus, the bubble-containing liquid is concentrated in the storage unit in a short time.
(9) In the system for manufacturing bubble-containing liquid, it is preferred that a liquid inlet unit that introduces a beverage as the liquid and a homogenization unit that homogenizes the beverage by dispersing particles contained in the beverage are further provided, the beverage containing the bubble-containing beverage or the bubbles is introduced in the homogenization unit to homogenize the particles and micronize the fine bubbles or the bubbles.
   In the above described system for manufacturing bubble-containing liquid, the gas introduced in the homogenization unit as the fine bubbles or the bubbles together with the beverage is crushed together with the particles contained in the beverage and the fine bubbles having a constant particle diameter are generated. The generated fine bubbles are converted into the superfine bubbles having a smaller particle diameter by the collapsing of the ultrasonic wave. Accordingly, the bubble-containing beverage is generated in the homogenization unit while the beverage is homogenized, and the bubble-containing liquid is collapsed by the ultrasonic wave. Thus, the bubble-containing beverage containing the superfine bubbles is efficiently manufactured.
(10) In the system for manufacturing bubble-containing liquid, it is preferred that a degassing unit that separates gas component from the bubble-containing liquid or the liquid containing the bubbles is provided. By adopting the above described configuration, after the oxygen dissolved in the beverage is degassed, the fine bubbles can be generated. Thus, the dissolved oxygen can be replaced with a desired gas.
(11) It is preferred that the degassing unit is connected immediately after the homogenization unit. By adopting the above described configuration, degassing performance is improved since the beverage is degassed by the degassing unit after high pressure is applied to the beverage and the beverage is heated to high temperature in the homogenization unit.
(12) In the system for manufacturing bubble-containing liquid, it is preferred that the storage unit has a pressure reducing valve, high pressure is applied to the bubble-containing liquid in the storage unit, and the bubble-containing liquid is configured to be extracted via the pressure reducing valve. By adopting the above described configuration, the bubble-containing liquid pressurized in the storage space is discharged to the outside via the pressure reducing valve while the pressure is reduced. Thus, the bubbles of the extracted bubble-containing liquid are concentrated. Consequently, the bubble-containing liquid of extremely high concentration can be stably and quickly extracted.
(13) In the system for manufacturing bubble-containing liquid, it is preferred that the bubble collapsing unit has a passage for passing the bubble-containing liquid; an outer body for covering a periphery of the passage; and a plurality of ultrasonic vibrators for irradiating the passage with the ultrasonic wave from an outside to an inside of the passage so that directions of irradiating the passage are different among the ultrasonic vibrators, a propagation liquid for propagating the ultrasonic wave is filled between the passage and the outer body, the ultrasonic vibrators are attached to an external side of the outer body, the bubble collapsing unit is arranged so that the passage is horizontally directed, and the propagation liquid is continuously introduced from a lower side of the outer body and continuously discharged from an upper side of the outer body.
   By adopting the above described configuration, air can be prevented from entering a flow passage of the propagation liquid. Thus, the propagation liquid can surely transmit the ultrasonic wave and the propagation liquid can suppress heat generation caused by the collapsing of the ultrasonic wave to function as a cooling water. Thus, performance deterioration of the bubble collapsing unit can be suppressed.
(14) The bubble generating unit has: a gas-liquid mixing chamber for generating a loop flow, the gas-liquid mixing chamber having a space with a circular cross-section; a liquid supply hole formed on one end side of the gas-liquid mixing chamber to supply pressurized fluid to the gas-liquid mixing chamber; a gas supply hole for flowing gas; a gas supply path formed on the other end side of the gas-liquid mixing chamber to supply the gas flowing from the gas supply hole toward the one end side of the gas-liquid mixing chamber along a peripheral surface of the space of the gas-liquid mixing chamber while making the gas flow spirally around a center axis of the liquid supply hole; and a jet hole formed on the other end side of the gas-liquid mixing chamber to eject the bubble-containing liquid formed by mixing the liquid and the gas in the gas-liquid mixing chamber, a center axis of the jet hole being aligned with the center axis of the liquid supply hole, a diameter of the jet hole being larger than a diameter of the liquid supply hole.

By adopting the above described configuration, in the gas-liquid mixing chamber, the liquid is supplied from the liquid supply hole arranged on the center of one side of the gas-liquid mixing chamber, and the gas forming the spiral flow is supplied from the side periphery of the other side of the gas-liquid mixing chamber. Consequently, the gas-liquid mixture forms a screw-like loop flow in the gas-liquid mixing chamber. Accordingly, the gas-liquid mixture is stirred sufficiently in the gas-liquid mixing chamber by the screw-like loop flow and a large amount of fine bubbles is generated. Then, the bubble-containing liquid containing the fine bubbles is ejected from the jet hole. Consequently, the fine bubbles can be generated and the bubble-containing liquid can be supplied efficiently.

### [Effects of the Invention]

The liquid containing superfine bubbles having a small and constant particle diameter of high concentration can be efficiently manufactured by using the present invention.

The purpose, feature, aspect and advantage of the present invention become clearer by the following detailed explanation and attached drawings.

### BRIEF DESCRIPTION OF THE DRAWINGS

Fig. 1 is a functional block diagram of the first system for manufacturing bubble-containing liquid concerning the embodiment of the present invention.
Fig. 2 is a drawing explaining a micronizing unit of a homogenization unit in the system for manufacturing bubble-containing liquid shown in Fig. 1.
Figs. 3A to 3D are drawings showing a bottomed member of a bubble generator in the system for manufacturing bubble-containing liquid shown in Fig. 1.
Figs. 4A to 4D are drawings showing a tubular member of the bubble generator in the system for manufacturing bubble-containing liquid shown in Fig. 1.
Fig. 5 is a drawing explaining an operation of the bubble generator in the system for manufacturing bubble-containing liquid shown in Fig. 1.
Figs. 6A and 6B are a side view and a front view of a bubble collapsing unit in the system for manufacturing bubble-containing liquid shown in Fig. 1.
Fig. 7 is a side cross-sectional view of the bubble collapsing unit in the system for manufacturing bubble-containing liquid shown in Fig. 1.
Fig. 8 is a functional block diagram of a storage unit in the system for manufacturing bubble-containing liquid shown in Fig. 1.
Fig. 9 is a brief cross-sectional view showing a degassing unit in the system for manufacturing bubble-containing liquid shown in Fig. 1.
Fig. 10 is a functional block diagram of the second system for manufacturing bubble-containing liquid concerning the embodiment of the present invention.
Fig. 11 is a functional block diagram of the third system for manufacturing bubble-containing liquid concerning the embodiment of the present invention.
Fig. 12 is a functional block diagram of the first modified example of the first system for manufacturing bubble-containing liquid concerning the embodiment of the present invention.
Fig. 13 is a functional block diagram of the second modified example of the first system for manufacturing bubble-containing liquid concerning the embodiment of the present invention.
Fig. 14 is a drawing showing the modified example of the storage unit in the first system for manufacturing bubble-containing liquid concerning the embodiment of the present invention.
Fig. 15 is a flowchart of a first method for manufacturing bubble-containing liquid concerning the embodiment of the present invention.
Fig. 16 is a flowchart of a second method for manufacturing bubble-containing liquid concerning the embodiment of the present invention.

### MODES FOR CARRYING OUT THE INVENTION

### [First system for manufacturing bubble-containing liquid]

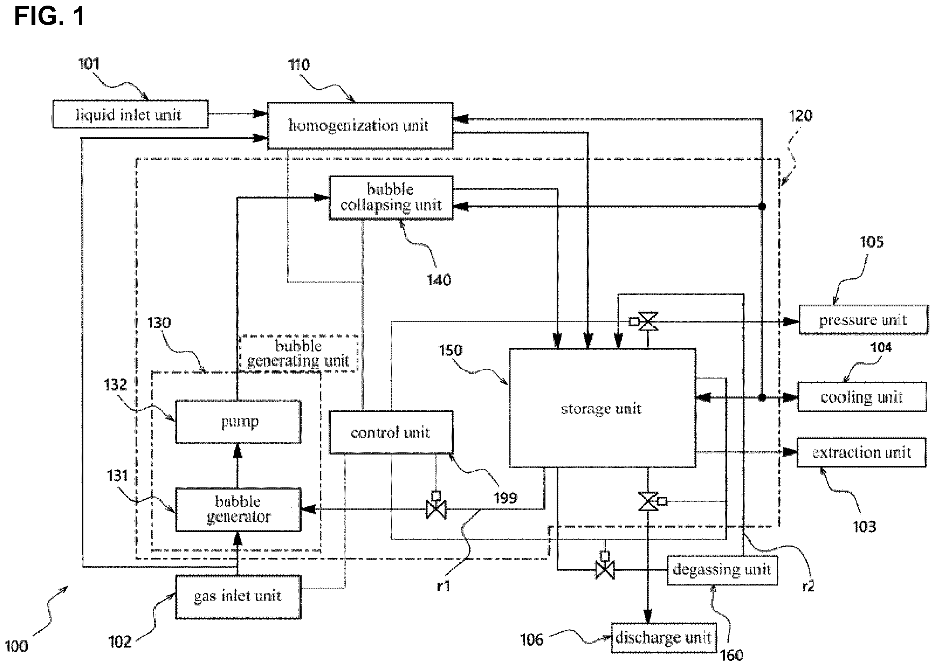

A first system 100 for manufacturing bubble-containing liquid concerning the embodiment of the present invention will be explained with reference to Figs. 1 to 9.
The system 100 for manufacturing bubble-containing liquid will be explained by applying the system to the manufacture of beverage represented by milk, fruit juice or the like as an example. However, the system can be also applied to the manufacture of the bubble-containing liquid other than the beverage.

When manufacturing the beverage represented by milk, fruit juice or the like, the system 100 for manufacturing bubble-containing liquid homogenizes the particle contained in the beverage, removes oxygen dissolved in the beverage, and sterilizes the beverage, for example. In the present embodiment, the manufacture of milk containing particles such as fat globules will be mainly explained.

Fig. 1 shows a functional block diagram of the system 100 for manufacturing bubble-containing liquid. The system 100 for manufacturing bubble-containing liquid mainly includes a homogenization unit 110 that homogenizes a liquid, a superfine bubble generating unit 120 that generates bubbles in the liquid, and a degassing unit 160 that degasses oxygen dissolved in the liquid.

In addition, the system 100 for manufacturing bubble-containing liquid includes a liquid inlet unit 101 that introduces the liquid into the homogenization unit 110, a gas inlet unit 102 that introduces gas into the homogenization unit 110 and the superfine bubble generating unit 120, an extraction unit 103 that extracts the bubble-containing liquid out of the system 100 for manufacturing bubble-containing liquid, a cooling unit 104 that supplies a cooling water to each component, a pressure unit 105 that pressurizes a later described storage unit 150 of the superfine bubble generating unit 120, and a discharge unit 106 that discharges the bubble-containing liquid out of the first system 100 for manufacturing bubble-containing liquid.

In the present embodiment, the liquid inlet unit 101 can introduce raw milk stored in a tank after milked from cows, and the gas inlet unit 102 can introduce carbon dioxide gas or nitrogen gas. The gas inlet unit is connected to gas tanks of the carbon dioxide gas and the nitrogen gas. Thus, the gas to be introduced can be switched.

In addition, a heat sterilization device (not illustrated) is provided downstream of the extraction unit 103. The heat sterilization device can perform a heat sterilization treatment using a low-temperature long-time pasteurization method (LTLT method: heat-sterilized at 63°C for 30 minutes), a high-temperature short-time method (HTST method: heat-sterilized at 72° C to 78°C for approximately 15 seconds), and an ultra-high-temperature instantaneous sterilization method (UHT method: heat-sterilized at 135°C to 150°C for 0.5 to 15 seconds), for example.

The components of the system 100 for manufacturing bubble-containing liquid are controlled by a control unit 199 for centrally managing the system 100 for manufacturing bubble-containing liquid. The control unit 199 can control the system 100 for manufacturing bubble-containing liquid in coordination with an external control device, for example. In addition, the components of the system 100 for manufacturing bubble-containing liquid can be controlled by other control devices, for example. In addition, the components of the system 100 for manufacturing bubble-containing liquid are connected to each other through pipes. The components are partly connected to each other through valves. The valves are opened and closed by the control unit 199.

### [Homogenization unit]

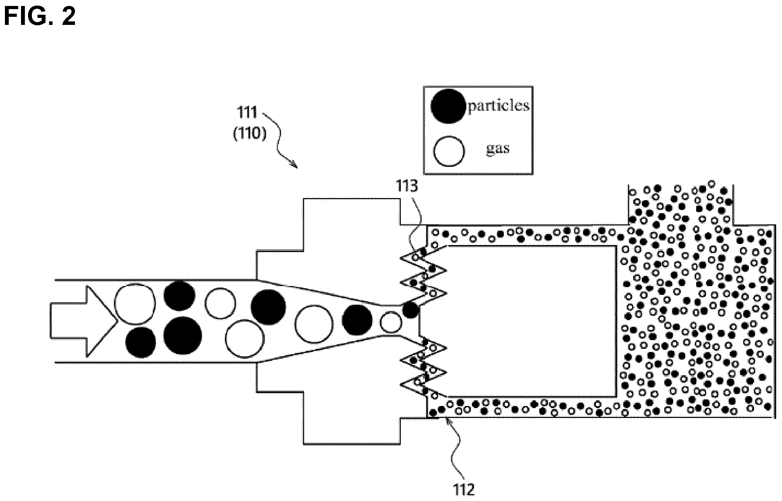

The homogenization unit 110 is a homogenizing apparatus which is unitized as a so-called high-pressure valve type homogenizer (e.g., shown in Japanese Unexamined Patent Application Publication No. 2010-17623). In the homogenization unit 110, high pressure is applied to the liquid introduced in the homogenization unit 110 by a so-called circulation path plunger pump, and the liquid is ejected from fine gaps of a homogenization valve (micronizing unit 111) formed on a flow passage (shown in Fig. 2).

At that time, the particles contained in the liquid are collided with each other and sheared. Thus, the particles are crushed and micronized in the gaps.
Consequently, the particles having a relatively large particle diameter are micronized among the particles contained in the liquid. Thus, the particles are dispersed and homogenized.
In other words, the homogenization unit 110 crashes and micronizes the particles contained in the liquid to uniform and homogenize the particle size.

In the present embodiment, the liquid is introduced into the homogenization unit 110 from the liquid inlet unit 101 and the gas is introduced into the homogenization unit 110 from the gas inlet unit 102. In the present embodiment, milk (raw milk) is introduced as the liquid, and carbon dioxide gas, hydrogen gas or nitrogen gas is introduced as the gas. The liquid and the gas are introduced through a gas-liquid mixer (not illustrated) provided on the homogenization unit and pass thorough the micronizing unit 111 in a state that high pressure is applied. Thus, the particles or the bubbles contained in the liquid are micronized. In the present embodiment, high pressure of 10 MPa to 70 MPa is applied to the liquid.

Fig. 2 is a brief side cross-sectional view showing the micronizing unit 111 of the high-pressure valve type homogenizer to function as the homogenization unit 110 of the system 100 for manufacturing bubble-containing liquid. In the homogenization unit 110, highly pressurized liquid and gas are supplied to the micronizing unit 111 (arrow direction in Fig. 2). Although the micronizing unit 111 is a valve type, other configurations can be used as long as the particles and bubbles contained in the liquid can be micronized.

In the micronizing unit 111, the liquid supplied in a highly pressurized state passes through a homogeneous valve 112. Fine gaps 113 are formed on the homogeneous valve 112. When the liquid passes thorough the fine gaps, the particles and the bubbles are collided with each other and sheared. Thus, the particles and the bubbles are micronized and homogenized. The particle diameter of the particles and the bubbles can be adjusted to a desired size by adjusting the gaps. In general, the particles and the bubbles are micronized to approximately 1 µm after passing through the homogeneous valve by adjusting the gaps 113. However, the bubbles can be micronized to micro-order having a size of several µm to several tens µm.

In the present embodiment, the homogenization unit 110 is the high-pressure valve type homogenizer which micronizes and homogenizes the highly pressurized beverage by making the highly pressurized beverage pass through the micronizing unit 111. However, other configurations can be used as long as the particles contained in the liquid can be micronized and homogenized. For example, an ultrasonic method, a stirring method and other methods can be also used. In addition to the valve type, a nozzle type and other types can be also used.
In the present embodiment, the homogenization unit 110 applies the pressure of approximately 50 MPa to the liquid. The homogenization unit 110 can be an integrally formed device or can be formed from several separate elements.

### [Superfine bubble generating unit]

Referring to Fig. 1 again, the bubble-containing liquid containing the micronized bubbles is introduced into the superfine bubble generating unit 120 from the homogenization unit 110. The superfine bubble generating unit 120 further generates fine bubbles, converts the fine bubbles into superfine bubbles having a smaller particle diameter, and stores the bubble-containing liquid.

The superfine bubble generating unit 120 mainly includes a bubble generating unit 130 that generates the fine bubbles in the liquid to manufacture the bubble-containing liquid containing the fine bubbles, a bubble collapsing unit 140 that collapses the fine bubbles contained in the bubble-containing liquid supplied from the bubble generating unit 130, and a storage unit 150 that stores the bubble-containing liquid supplied from the bubble collapsing unit 140. The bubble generating unit 130, the bubble collapsing unit 140 and the storage unit 150 are connected to each other to form a first circulation path r1 (loop) for circulating the bubble-containing liquid.

### [Bubble generating unit]

The bubble generating unit 130 includes a bubble generator 131 that is connected to the storage unit 150, and a pump 132 that is connected to the bubble generator 131 to supply the bubble-containing liquid to the bubble collapsing unit 140. The bubble generator 131 is connected to the gas inlet unit 102. The liquid is introduced in the bubble generator 131 from the storage unit 150 and the gas is introduced in the bubble generator 131 from the gas inlet unit 102.

The pump 132 suctions the bubble-containing liquid from the storage unit 150 through the bubble generator 131. The pump 132 discharges the bubble-containing liquid containing the fine bubbles generated in the bubble generator 131 toward the bubble collapsing unit 140.

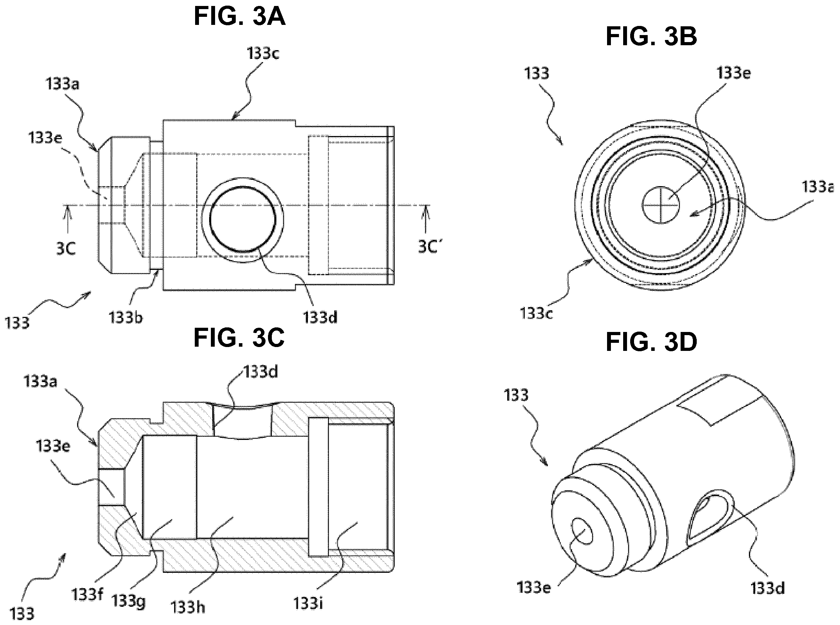

The bubble generator 131 is a so-called bubble generation nozzle. The bubble generator 131 will be explained by using Figs. 3A to 5. The bubble generation nozzle includes a bottomed member 133 formed in a tubular shape having a circular cross-section and a tubular member 134 formed in a tubular shape. A bottom portion 133a is formed on one end side of the bottomed member 133. When the tubular member 134 is fitted from the other end of the bottomed member 133, a space having a circular cross-section is formed as a gas-liquid mixing chamber 131m. The gas and the liquid are flowing in the gas-liquid mixing chamber 131m and mixed with each other. Thus, the bubble-containing liquid, which is a gas-liquid mixture, is generated.

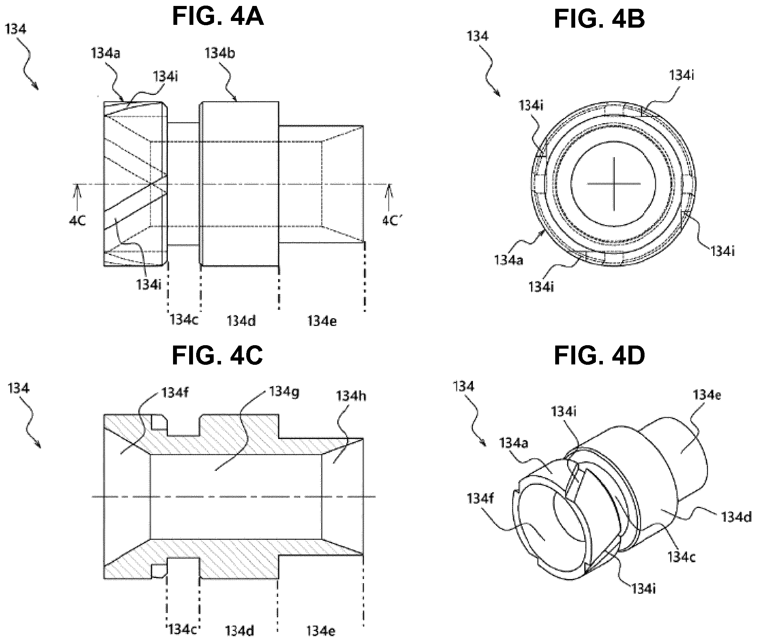

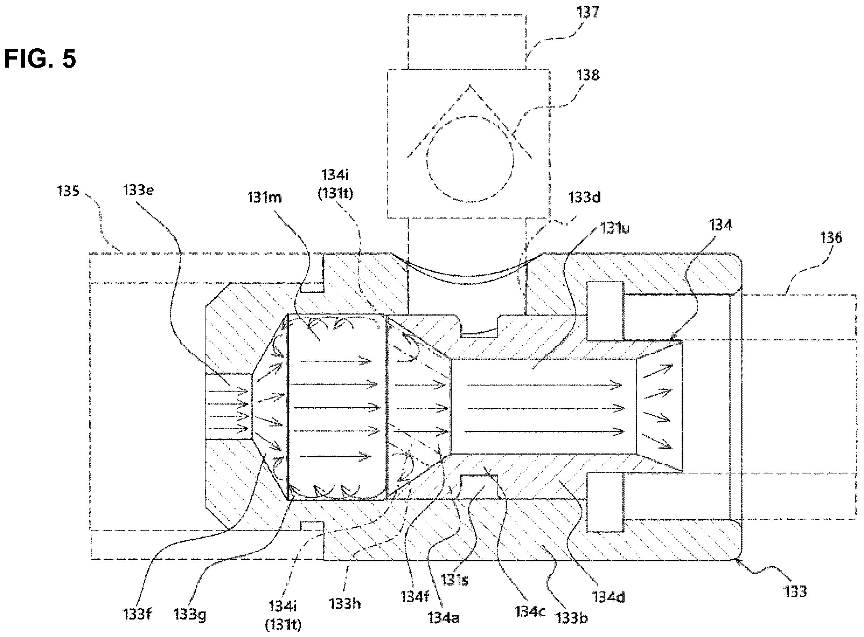

Figs. 3A to 3D show schematic diagrams of the bottomed member. Fig. 3A is a side view of the bottomed member 133. Fig. 3B is a bottom view of the bottomed member 133. Fig. 3C is a cross-sectional view taken along line 3C-3C' of Fig. 3A. Fig. 3D is a perspective view of the bottomed member 133. In addition, Figs. 4A to 4D show schematic diagrams of the tubular member 134. Fig. 4A is a side view of the tubular member 134. Fig. 4B is a bottom view of the tubular member 134. Fig. 4C is a cross-sectional view taken along line 4C-4C' of Fig. 4A. Fig. 4D is a perspective view of the tubular member 134. Furthermore, Fig. 5 is a brief side cross-sectional view for explaining an operation of the bubble generation nozzle. The bubble generation nozzle is indicated by a solid line, while the other parts are indicated by a dotted line.

As shown in Figs. 3A to 3D, the bottomed member 133 includes a bottom portion 133a formed in a disk shape, a first side wall portion 133b formed in an annular shape continued from the bottom portion 133a, and a second side wall portion 133c formed in an annular shape continued from the first side wall portion 133b. The bottomed member 133 has a gas supply hole 133d penetrating the second side wall portion 133c. The bottomed member 133 has a liquid supply hole 133e on the bottom portion 133a to supply the liquid. As shown in Fig. 3B, the liquid supply hole 133e is formed at the center of the bottom portion 133a and formed in a cylindrical shape.

As shown in Fig. 3C, the bottom portion 133a forms a first truncated conical space 133f having a truncated conical shape. In addition, the bottom portion 133a, the first side wall portion 133b and the second side wall portion 133c form a first cylindrical space 133g having a cylindrical shape. Furthermore, the second side wall portion 133c forms a second cylindrical space 133h having a cylindrical shape and a third cylindrical space 133i having a cylindrical shape. The diameter of the second cylindrical space 133h is slightly smaller than that of the first cylindrical space 133g. The diameter of the third cylindrical space 133i is larger than that of the first cylindrical space 133g.

The truncated surface of the first truncated conical space 133f is continued to the liquid supply hole 133e. The bottom surface of the first truncated conical space 133f is continued to the first cylindrical space 133g. Namely, the first truncated conical space 133f is extended so as to increase the diameter from the liquid supply hole 133e to the first cylindrical space 133g and is formed by a tapered surface continued from an inner peripheral surface of the liquid supply hole 133e to an inner peripheral surface of the first side wall portion 133b.

As shown in Figs. 4A to 4D, the tubular member 134 includes a first side peripheral portion 134a formed in an annular shape and a second side peripheral portion 134b. The second side peripheral portion 134b includes a first side peripheral area 134c, a second side peripheral area 134d and a third side peripheral area 134e. The diameter of the second side peripheral area 134d is larger than that of the first side peripheral area 134c. The diameter of the third side peripheral area 134e is smaller than that of the second side peripheral area 134d. The diameter of the first side peripheral portion 134a is same as the diameter of the second side peripheral area 134d of the second side peripheral portion 134b capable of being housed in the second cylindrical space 133h of the bottomed member 133.

As shown in Fig. 4C, the first side peripheral portion 134a forms a second truncated conical space 134f having a truncated conical shape. A diameter of the second truncated conical space 134f is reduced from one side to the other. The first side peripheral portion 134a and the second side peripheral portion 134b form a fourth cylindrical space 134g having a cylindrical shape extending from one side to the other. In addition, the second side peripheral portion 134b forms a third truncated conical space 134h. The diameter of the third truncated conical space 134h is increased from one side to the other.

The second truncated conical space 134f, the fourth cylindrical space 134g and the third truncated conical space 134h are continuously arranged in this order. The truncated surface of the second truncated conical space 134f, the bottom surface and the top surface of the fourth cylindrical space 134g and the truncated surface of the third truncated conical space 134h have the same hole diameter and are connected to each other. The center axes of the second truncated conical space 134f, the fourth cylindrical space 134g and the third truncated conical space 134h are aligned with each other.

Four recessed portions 134i are spirally formed on the outer periphery of the first side peripheral portion 134a of the tubular member 134. The recessed portions 134i are formed at constant intervals so that the recessed portions 134i spirally extends from one end of the first side peripheral portion 134a to the other. It is preferred that a plurality of recessed portions is formed and the recessed portions are formed at constant intervals.

The bottomed member 133 and the tubular member 134 are made of stainless steel SUS316 and formed by a cutting process. However, the bottomed member 133 and the tubular member 134 can be made of other metal materials. Furthermore, the other materials such as glass, ceramic, resin and pottery can be also used and the processes such as an injection molding process and a press forming process can be used according to the other materials without limited to the cutting process.

As shown in Fig. 5, in the bubble generation nozzle, the tubular member 134 is fitted into the bottomed member 133 by press fitting so that the first side peripheral portion 134a is directed to the deeper side. Thus, the second side peripheral area 134d of the second side peripheral portion 134b and the first side peripheral portion 134a of the tubular member 134 are in contact with an inner periphery of the first side wall portion 133b at the second cylindrical space 133h of the bottomed member 133.

The first side peripheral area 134c of the second side peripheral portion 134b of the tubular member 134 and the second side wall portion 133c of the bottomed member 133 form an annular space 131s which is communicated with the gas supply hole 133d of the bottomed member 133. The recessed portions 134i function as a gas supply path 131t which extends spirally to be communicated from the annular space 131s to the gas-liquid mixing chamber 131m.

In addition, the first truncated conical space 133f, the first cylindrical space 133g and the second truncated conical space 134f form the gas-liquid mixing chamber 131m. A bottom surface of the first truncated conical space 133f is continued to the first cylindrical space 133g and a bottom surface of the second truncated conical space 134f is continued to the first cylindrical space 133g from the opposite side of the first truncated conical space 133f. Thus, the gas-liquid mixing chamber 131m has an approximately rugby-ball shape so that a diameter is reduced from both ends of a cylindrical shape. Accordingly, a circular cross-sectional space is formed over the entire the gas-liquid mixing chamber 131m.

The center axes of the first truncated conical space 133f, the first cylindrical space 133g, the second truncated conical space 134f, the fourth cylindrical space 134g and the third truncated conical space 134h are aligned with each other. The truncated surface of the second truncated conical space 134f has a larger hole diameter than the liquid supply hole 133e. The bottom surface of the first truncated conical space 133f, the bottom surface of the second truncated conical space 134f and the top surface and the bottom surface of the first cylindrical space 133g have an approximately same hole diameter. Here, the fourth cylindrical space 134g and the third truncated conical space 134h function as a jet hole 131u to eject the gas-liquid mixture.

The gas supply path 131t supplies the gas for forming spiral flow along a side periphery of the gas-liquid mixing chamber 131m from a side periphery of the bottom surface of the second truncated conical space 134f toward the first cylindrical space 133g. The supplied gas forms a spiral flow around the center axis of the second truncated conical space 134f. Consequently, the gas forming the spiral flow is supplied along the side periphery of the first cylindrical space 133g from the side periphery of the second truncated conical space 134f.

Note that convex/concave shapes are formed on an inner wall of the gas-liquid mixing chamber 131m. For example, the convex/concave shapes can be a so-called shark skin, a ceramic sprayed surface, a projected shape or similar configurations. The above described the configurations are not necessarily formed on the entire inner wall. They can be partly formed.

Then, the operation of the bubble generation nozzle will be explained. Fig. 5 shows the bubble generation nozzle by a solid line. In addition, Fig. 5 shows, by a dotted line, a liquid inlet tube 135 connected to one end side of the bottomed member 133 of the bubble generation nozzle, a gas-liquid mixture outlet tube 136 connected to the other end side of the tubular member 134 of the bubble generation nozzle, and a gas inlet tube 137 connected to the gas supply hole 133d of the bottomed member 133 of the bubble generation nozzle.

The liquid inlet tube 135 has an inner screw, and the inner screw is screwed with an outer screw formed on the bottom portion 133a of the bottomed member 133. In addition, the gas-liquid mixture outlet tube 136 has an outer screw, and the outer screw is screwed with an inner screw formed on the third cylindrical space 133i of the bottomed member 133. In addition, a horizontal surface is formed on an outer periphery of the bottomed member 133 so as to be held by a wrench when screwed with the other tubes.

In addition, the liquid inlet tube 135 is connected to the storage unit 140 so that the liquid stored in the storage unit 140 is sucked by the pump 132 and introduced in the liquid inlet tube 135. In addition, the gas-liquid mixture outlet tube 136 is connected to the bubble collapsing unit 140 and the first circulation path r1 is formed via the bubble generation nozzle.

In addition, the gas inlet tube 137 is connected to the gas inlet unit 102 via a throttle valve (not illustrated). A check valve 138 is formed inside the gas inlet tube 137 so as to stably generate the bubbles.

First, pressurized liquid is supplied from the liquid inlet tube 135 to the gas-liquid mixing chamber 131m through the liquid supply hole 133e. At that time, after the pressurized liquid flows along a line connecting the liquid supply hole 133e, the first truncated conical space 133f and the jet hole 131u, a part of the pressurized liquid is ejected from the jet hole 131u while spreading.

Here, the gas flows in the gas-liquid mixing chamber 131m from the gas inlet tube 137 through the annular space 131s and the gas supply path 131t. The liquid supplied from the liquid supply hole 133e and the gas supplied from the gas supply path 131t into the gas-liquid mixing chamber 131m flow along the center axis in the gas-liquid mixing chamber 131m, spread to the periphery at the other end side of the gas-liquid mixing chamber 131m, flow the side periphery of the gas-liquid mixing chamber in an opposite direction of the flow of the center axis, and return to the center axis at the one end side of the gas-liquid mixing chamber 131m. Thus, the liquid and the gas are circulated forming a loop flow. In addition, since the gas-liquid mixing chamber 131m is an approximately cylindrical shaped space, high-speed loop flow can be easily formed and the above described operation can be easily obtained.

Furthermore, the gas flowing from the gas supply hole 133d is supplied in the gas-liquid mixing chamber 131m from the gas supply path toward the first truncated conical space 133f of the gas-liquid mixing chamber 131m while being flowed spirally around the center axis in the annular space 131s.

Consequently, vacuum degree in the gas-liquid mixing chamber 131m is increased. Thus, the amount of the gas flowing from the gas supply hole 133d can be further increased and the generation of the bubblies is accelerated. The fine bubbles such as microbubble are continuously generated by a series of the above described operation.

Furthermore, since the gas supply path 131t is spirally formed around the center axis of the second truncated conical space 134f, the gas supplied from the gas supply path 131t forms a flow along the peripheral surface of the space of the gas-liquid mixing chamber 131m having a circular cross-section while being flowed spirally. Consequently, a screw-like loop flow spirally flowing in the circumferential direction is formed in the gas-liquid mixing chamber 131m.

Since the convex/concave shapes are formed on the inner wall of the gas-liquid mixing chamber 131m, the gas-liquid mixture, which is a mixed fluid of the liquid and the gas flowing in a high-speed loop, collides with the convex/concave shapes. Thus, the gas contained in the gas-liquid mixing chamber 131m can be further minimized and high-speed loop flow can be accelerated. Further, vacuum degree in the gas-liquid mixing chamber 131m can be increased.

In addition, the gas supplied from the gas supply path 131t is minimized by a turbulent flow generated at the boundary between the gas supply path 131t and the gas-liquid mixing chamber 131m, stirred/sheared by the loop flow which is accelerated by the first truncated conical space 133f and the second truncated conical space 134f, collided with the convex/concave shapes of the inner wall of the gas-liquid mixing chamber 131m, further minimized by a turbulent flow generated when a part of the gas collides with the pressurized liquid supplied from the liquid supply hole 133e, further minimized when collided with an external gas and/or external liquid in the jet hole 131u, and ejected from the second truncated conical space 134f as the bubble-containing liquid which is the gas-liquid mixture containing the fine bubbles such as microbubble.

The bubble generator is not limited to the above described nozzle type. Other configurations can be also used. For example, the configurations and functions of turning, collapsing, storing and foaming (pressurizing/depressurizing) can be used (e.g., shown in Japanese Unexamined Patent Application Publication No.2015-186781).

### [Bubble collapsing unit]

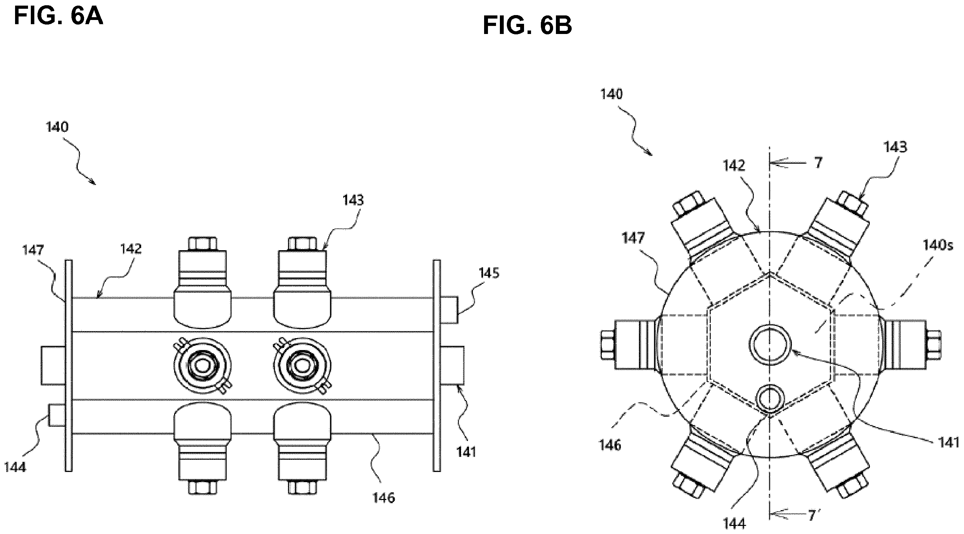

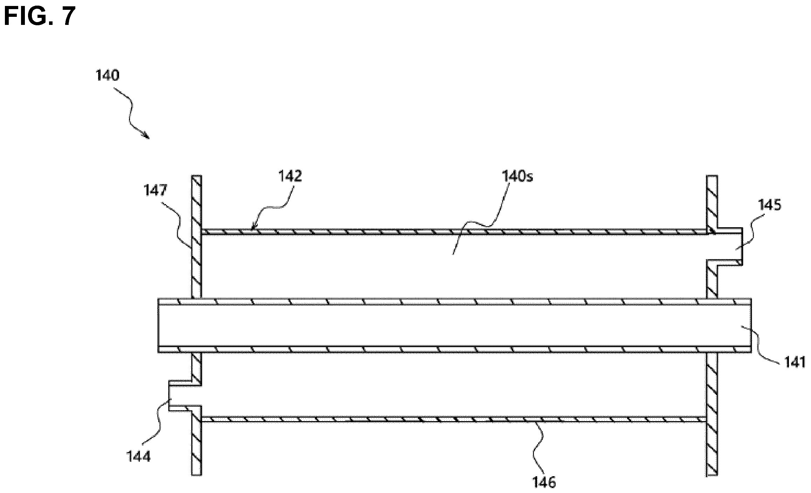

Figs. 6A and 6B show schematic diagrams of the bubble collapsing unit 140 of the superfine bubble generating unit 120. Fig. 6A shows a side view of the bubble collapsing unit 140, and Fig. 6B shows a front view of the bubble collapsing unit 140. In addition, Fig. 7 shows a side cross-sectional view of the bubble collapsing unit 140 shown in Fig. 6B.

One side of the bubble collapsing unit 140 is connected to the bubble generating unit 130 and the other side is connected to the storage unit 150. The bubble collapsing unit 140 includes a linearly extending passage 141 and an outer body 142 surrounding a periphery of the passage 141. The bubble collapsing unit 140 has a two-layer structure to have an intermediate space 140s formed by the passage 141 and the outer body 142. The bubble collapsing unit 140 is arranged so that the passage 141 horizontally directed. The bubble-containing liquid manufactured in the bubble generating unit 130 is passed through the passage 141 toward the storage unit 150.

A plurality of ultrasonic vibrators 143 is formed on the outer body 142. Each of the ultrasonic vibrators 143 irradiates the passage 141 with ultrasonic wave. Propagation liquid is filled in the intermediate space 140s formed between the passage 141 and the outer body 142. The ultrasonic irradiated from the ultrasonic vibrators 143 is transmitted inside the passage 141 through the propagation liquid to collapse the bubbles of the bubble-containing liquid flowing in the passage 141.

The propagation liquid is the cooling water supplied from the cooling unit 104. The propagation liquid is introduced into the intermediate space 140s from a propagation liquid inlet 144 provided on the outer body 142 and discharged from a propagation liquid outlet 145 (shown in Fig. 7). Here, the propagation liquid inlet 144 is provided on a lower side of the outer body 142 and the propagation liquid outlet 145 is provided on an upper side of the outer body 142. Therefore, the propagation liquid is introduced from the lower side of the outer body 142 and discharged from the upper side of the outer body 142. Consequently, the cooling water is supplied so as to expel air from the intermediate space. In the bubble collapsing unit 140, the bubble-containing liquid passing through the bubble collapsing unit 140 is heated by the ultrasonic transmitted through the propagation liquid. However, the propagation liquid also has a function of cooling the bubble collapsing unit 140. Thus, the temperature of the bubble-containing liquid passing through the bubble collapsing unit can be adjusted by the flow rate of the coolant.

In the present embodiment, the passage 141 of the bubble collapsing unit 140 is a pipe made of fluororesin, specifically PFA (copolymer of polytetrafluoroethylene and perfluoroalkyl vinyl ether). However, the passage 141 can be a pipe made of PVC (polyvinyl chloride) or other resin materials. Otherwise, metal materials can be also used from the aspect of hygiene.

Consequently, the passage 141 has a circular cross-section and extends in a cylindrical shape having the same diameter. Thus, the flow passage having an extremely small cross-sectional area compared to the tank is formed. The passage 141 is connected so as to be interposed between the bubble generating unit 130 and the storage unit 150. Thus, the bubble-containing liquid supplied from the bubble generating unit 130 flows toward the storage unit 150 in a state that the inside of the passage 141 is filled with the bubble-containing liquid.

The outer body 142 is made of a stainless material. The outer body 142 includes a side peripheral member 146 extending in a hexagonal columnar shape having a regular hexagonal cross-section and a pair of planar members 147 having a disk shape to sandwich the side peripheral member 146 from both sides in the extending direction. The passage 141 is fitted to the center of both planar members 147. Thus, the planar members 147 fix the passage 141 so that the passage 141 extends on the center axis of the hexagonal shape of the side peripheral member 146. Consequently, the intermediate space 140s is formed on the outside of the passage 141 and the side peripheral member 146 of the outer body 142. In addition, similar spaces are formed on the outer periphery of the passage 141 and each surface of the hexagonal columnar shape of the side peripheral member 146.

The ultrasonic vibrators 143 are attached to each surface of the hexagonal columnar shape of the outer body 142. Each of the ultrasonic vibrators 143 is separated into two stages in the extending direction of the passage 141. The bubble generating unit 130 side is referred to as a former stage group of the ultrasonic vibrators, and the storage unit 150 side is referred to as a latter stage group of the ultrasonic vibrators. Each stage group of the ultrasonic vibrators consists of six ultrasonic vibrators 143 arranged radially from the center axis of the passage 141.

A pair of vibrators is formed by two opposite ultrasonic vibrators 143. Thus, three pairs of vibrators are formed by six ultrasonic vibrators 143. A frequency and an output of each of the ultrasonic vibrators can be adjusted by the control unit 199. In the present embodiment, the ultrasonic wave emitted from twelve ultrasonic vibrators 143 has the same frequency and the same output.

Each of the six ultrasonic vibrators 143 emits the ultrasonic wave toward one point of the center of the passage 141. Accordingly, each of the ultrasonic vibrators 143 emits the ultrasonic wave from different positions and to different positions inward in the radial direction so as to be directed to the center of the passage.

Thus, a uniform field for collapsing bubbles is formed in the passage 141. Consequently, the flow of the bubble-containing liquid flowing in the passage 141 is prevented from being interrupted by the ultrasonic wave. In particular, in each pair of vibrators, the ultrasonic wave is emitted from the opposite position toward the opposite direction. As a result, the ultrasonic field for collapsing bubbles is formed from the center of the passage 141. Thus, the bubble-containing liquid passing through the passage 141 is collapsed and the superfine bubbles having a constant particle diameter are evenly generated without unevenness.

In the bubble collapsing unit 140, the ultrasonic wave is emitted from a plurality of directions and the ultrasonic field for collapsing bubbles is formed at a position where the ultrasonic wave is concentrated. Accordingly, in the present embodiment, each pair of the ultrasonic vibrators forms the ultrasonic field for collapsing bubbles in the passage 141.

Even if all the fine bubbles are not collapsed in the ultrasonic field for collapsing bubbles formed by the former stage group of the ultrasonic vibrators, the rest of the fine bubbles are collapsed in the ultrasonic field for collapsing bubbles formed by the latter stage group of the ultrasonic vibrators. Thus, the bubble collapsing unit 140 of the present embodiment can surely collapse the fine bubbles to generate uniform superfine bubbles.
In the present embodiment, the bubble collapsing unit 140 generates so-called ultrafine bubbles as the superfine bubbles.

The bubble collapsing unit 140 concerning the embodiment of the present invention forms an ultrasonic field for collapsing bubbles to collapse the fine bubbles contained in the liquid and convert the fine bubbles into the superfine bubbles. The ultrasonic field for collapsing bubbles is formed by being continuously irradiated with the ultrasonic wave, and ultraviolet rays are generated on the ultrasonic field for collapsing bubbles. Consequently, sterilization effect can be obtained by the ultraviolet rays when the liquid passes through the ultrasonic field for collapsing bubbles.

Furthermore, since the liquid is irradiated with the ultrasonic wave forming the ultrasonic field for collapsing bubbles in the bubble collapsing unit 140, numerous vacuum bubbles are generated by the cavitation in the liquid. When the vacuum bubbles are collapsed by repeating compression and expansion, a reaction field having an extremely high temperature and high pressure is formed. In the reaction field, cell walls of the bacteria are destroyed when the vacuum bubbles are burst. Thus, sterilization effect can be obtained to sterilize heat resistant spore forming bacteria such as Staphylococcus aureus and Bacillus cereus in addition to general viable bacteria, Legionella bacteria, Escherichia coli and the like.

### [Storage unit]

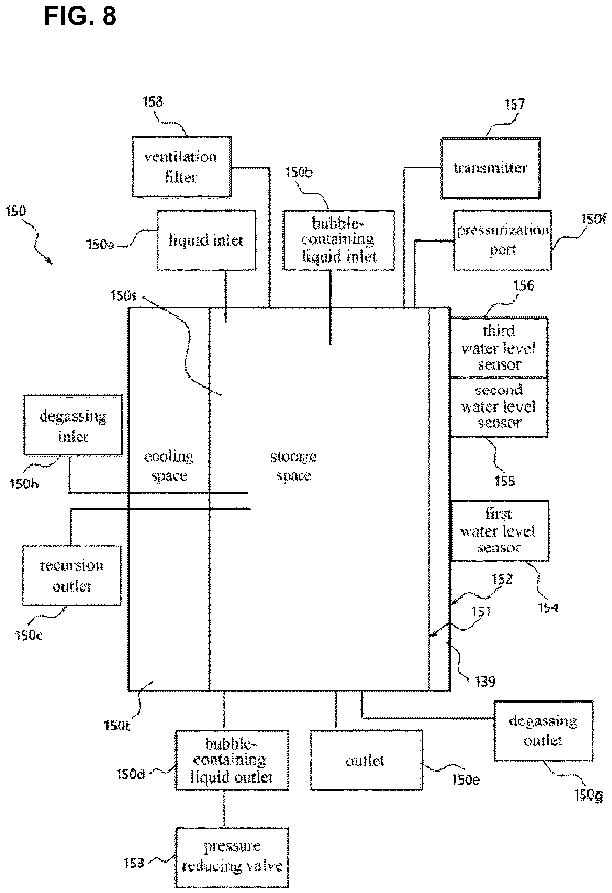

Fig. 8 is a functional block diagram of the storage unit 150. As shown in Fig. 8, the storage unit 150 mainly includes a tank container 151 and an outer container 152 for covering the tank container 151. The tank container 151 forms a storage space 150s having a predetermined capacity for storing the bubble-containing liquid. In addition, a cooling space 150t is formed between the tank container 151 and the outer container 152. The cooling water is supplied from the cooling unit 104 to the cooling space 150t.

The tank container 151 is made of PVC, formed in a cylindrical shape and a completely hermetically sealed structure. Consequently, a trace gas generated when the bubbles are collapsed by the ultrasonic wave in the bubble collapsing unit 140 is not in contact with the air even if the trace gas flows in the storage unit 150. In addition, since the tank container 151 has a hermetically sealed structure, the pressure in the storage unit 150 can be controlled.

The bubble-containing liquid is stored in the tank container 151. In the bubble-containing liquid, the bubble having a smaller particle diameter tends to be diffused downward. Accordingly, in the present embodiment, an NB area where so-called nanobubble having a particle diameter of nano-order dominantly exists is formed on the bottom of the storage space 150s of the tank container 151, an MN area where the nanobubble and the microbubble are mixed is formed on an upper side of the NB area, and an MB area where the microbubble dominantly exists is formed on further upper side of the MN area. The position of each area in the tank container 151 varies depending on the storage amount of the liquid.

The storage unit 150 further includes a liquid inlet 150a connected to the liquid inlet unit 101, a bubble-containing liquid inlet 150b connected to the bubble collapsing unit 140, a recirculation outlet 150c connected to the bubble generating unit 130, a bubble-containing liquid outlet 150d connected to the extraction unit 103, an outlet 150e connected to the discharge unit 106, a pressurization port 150f connected to the pressure unit 105, a degassing outlet 150g connected to an inlet passage 166 of a later described degassing unit 160, and a degassing inlet 150h connected to an outlet passage 167 of the degassing unit 160. These components are formed to function as the passage of the liquid or the gas of the tank container 151.

The liquid inlet 150a is mainly formed by a cylindrical pipe. The liquid inlet 150a communicates from the upper surface of the tank container 151 to inside the tank container 151 to introduce stock solution from the liquid inlet unit 101 into the tank container 151. Consequently, the liquid is supplied from an upper side of the storage space 150s. In addition, the pressurization port 150f is mainly formed by a cylindrical pipe. The pressurization port 150f extends from the upper surface of the tank container 151 to the top surface of the tank container 151 to apply the pressure applied from the pressure unit 105 in the storage space 150s of the tank container 151.

The bubble-containing liquid inlet 150b is mainly formed by a cylindrical pipe. The bubble-containing liquid inlet 150b extends from the upper surface of the tank container 151 to a half height position from the bottom surface of the tank container 151 to supply the bubble-containing liquid from an upper side of the tank container 151.

The pipe of the bubble-containing liquid inlet 150b extends in a vertical direction and is bent in a horizontal direction at the lower side to form an L-shape. The bubble-containing liquid is discharged in the horizontal direction. Because of this, the bubble-containing liquid is stirred in the storage space 150s by receiving the discharge pressure horizontally. However, the bubble-containing liquid does not receive the discharge pressure vertically. Thus, the bubbles having a small particle diameter is not prevented from being concentrated at the bottom of the storage space.

The recirculation outlet 150c is mainly formed by a cylindrical pipe. The recirculation outlet 150c extends from the bottom portion of the tank container 151 to a quarter height position from the bottom portion of the tank container 151. The recirculation outlet 150c discharges the bubble-containing liquid stored in a quarter height position from the bottom portion of the tank container 151 to the first circulation path r1 and the bubble-containing liquid is recirculated to a gas-liquid mixer 131.

The pipe of the recirculation outlet 150c extends in a vertical direction and is bent in a horizontal direction at the upper side to form an inverted L-shape. The bubble-containing liquid is sucked in the horizontal direction. Because of this, the bubble-containing liquid is stirred in the storage space 150s by receiving the suction pressure horizontally. However, the bubble-containing liquid does not receive the suction pressure vertically. Thus, the bubbles having a small particle diameter are not prevented from being concentrated at the bottom of the storage space.

The bubble-containing liquid outlet 150d is mainly formed by a cylindrical pipe. The bubble-containing liquid outlet 150d is provided on the bottom portion of the tank container 151 as a bottom valve to extract the bubble-containing liquid from the bottom of the tank container 151. The bubble-containing liquid outlet 150d is connected to the extraction unit 103 via a pressure reducing valve 153.

Consequently, the bubble-containing liquid pressurized in the storage space 150s is discharged to the extraction unit 103 via the pressure reducing valve 153 while the pressure is reduced. Thus, further concentrated bubble-containing liquid can be extracted from the storage space 150s. In addition, conventionally well-known pressure reducing valve such as a direct-acting pressure reducing valve and a pilot-operated pressure reducing valve can be used as the pressure reducing valve 153.

The outlet 150e is mainly formed by a cylindrical pipe. The outlet 150e is provided on the bottom portion of the tank container 151 as a bottom valve to discharge the bubble-containing liquid from the bottom of the tank container 151. The outlet 150e is connected to the extraction unit 103.

The degassing outlet 150g is mainly formed by a cylindrical pipe. The degassing outlet 150g is provided on the bottom portion of the tank container 151 as a bottom valve to discharge the bubble-containing liquid from the bottom of the tank container 151 to a second circulation path r2 and supply the bubble-containing liquid from the storage space 150s to the inlet passage 166 of the degassing unit 160.

The degassing inlet 150h is mainly formed by a cylindrical pipe. The degassing inlet 150h extends from the upper surface of the tank container 151 to a half height position from the bottom surface of the tank container 151 to introduce the bubble-containing liquid degassed in the degassing unit 160 from the outlet passage 167 of the degassing unit 160 to the storage space 150s.

Furtheremore, three water level sensors 154, 155, 156 are provided on the storage unit 150. The first water level sensor 154 is provided on one-third height position from the bottom portion of the tank container 151 to detect that the liquid is filled to one third of the storage space 150s. The second water level sensor 155 is provided on seven-tenths height position from the bottom portion of the tank container 151 to detect that the liquid is filled to seven-tenths of the storage space 150s. The third water level sensor 156 is provided on four-fifths height position from the bottom portion of the tank container 151 to detect that the liquid is filled to eight-tenths of the storage space 150s. As described later, the control unit 199 controls the flow rate of the inlets and the outlets provided on the storage unit 150 based on the detecting and not detecting state of the water level sensors. Thus, the amount of the bubble-containing liquid in the storage space 150s is adjusted.

Furthermore, the storage unit 150 includes a pressure transmitter 157 for measuring the pressure and a ventilation filter 158 for releasing the storage space 150s in the tank container to the atmospheric pressure. The pressure transmitter 157 is provided on the tank container 151 and electrically connected to the control unit 199 to measure the pressure of the storage space 150s. The ventilation filter 158 is provided on the tank container 151 and electrically connected to the control unit 199 to adjust the pressure in the storage space 150s while securing a ventilation passage from the storage space 150s.

In the present embodiment, the tank container 151 is made of PVC (polyvinyl chloride) and formed in a completely hermetically sealed structure by sealing the upper portion using resin-welding, adhesion or the like. Since the tank container 151 (i.e., storage unit 150) is hermetically sealed, the storage space 150s is isolated from the atmosphere. Thus, the storage space 150s can be pressurized by the pressure unit 105.

In addition, the pressure of the pressurized storage space 150s can be adjusted by the ventilation filter 158. The control unit 199 measures the pressure of the storage space 150s by the pressure transmitter 157 and adjusts the pressure to a predetermined value by the pressure unit 105 and the ventilation filter 158. In the present embodiment, the pressure unit 105 can pressurize the storage space 150s to approximately 0.4 MPa to 0.6 MPa.

In the system 100 for manufacturing bubble-containing liquid of the present embodiment, the bubble generating unit 130 and the bubble collapsing unit 140 are separated from the storage unit 150. Consequently, the bubble generating unit 130 and the bubble collapsing unit 140 continuously supply a predetermined amount of the bubble-containing liquid having a constant particle diameter without being affected by the capacity of the storage unit 150 and the bubble-containing liquid is stored in the storage unit 150. Thus, the bubbles are prevented from being aggregated in the storage unit 150.

Namely, the bubbles having a superfine particle diameter generated by the conventional ultrasonic collapsing do not have a constant diameter and it was difficult to store such bubbles since the superfine bubbles having different diameters are aggregated when stored. However, when the system 100 for manufacturing bubble-containing liquid of the present embodiment is used, the bubbles having a constant particle diameter are generated and therefore the bubble-containing liquid can be stored without being aggregated.

In addition, since a zeta potential and the like vary depending on the particle diameter in the bubbles having a superfine particle diameter, coagulation reaction may occur. However, in the system 100 for manufacturing bubble-containing liquid of the present embodiment, the bubbles having a similar particle diameter exist in the same area in the storage space 150s. Thus, the bubble-containing liquid can be stored without being aggregated.

### [Degassing unit]

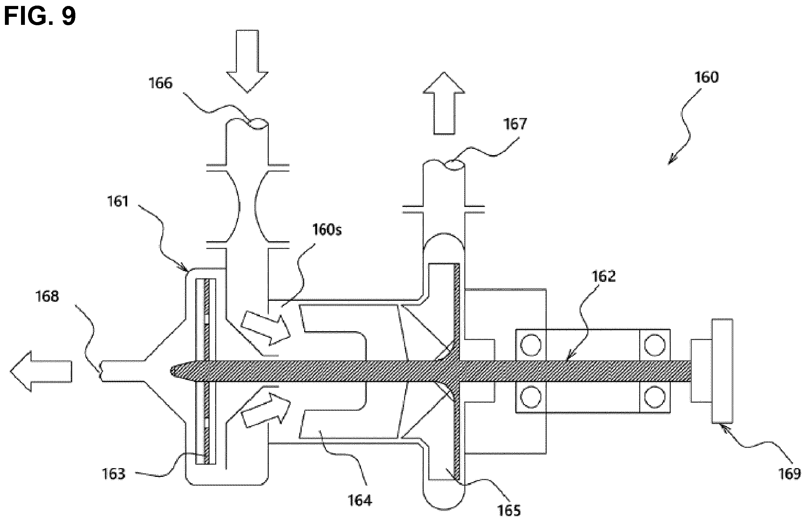

Fig. 9 is a schematic diagram of a degassing device forming the degassing unit 160 showing a side cross-sectional view of the degassing unit 160 of inducer-type. The degassing unit 160 is built into the second circulation path r2. The liquid is introduced into the degassing unit 160 from the storage unit 150 and the liquid is recirculated to the storage unit 150 after the liquid is degassed. Namely, the degassing unit 160 is incorporated in and connected to the second circulation path r2 which circulates the liquid stored in the storage unit 150.

The degassing unit 160 is incorporated in and connected to the second circulation path r2, the inlet passage 166 is connected to the degassing outlet 150g of the storage unit 150, and the outlet passage 167 is connected to the degassing inlet 150h of the storage unit. In addition, a later described discharge passage 168 is connected to a vacuum pump (not illustrated).

In addition, a separate impeller 163, an inducer 164 and a main impeller 165 are formed by mounting a predetermined number of blade members having a predetermined shape on a rotary shaft member 162. These components function as an impeller for separating the liquid and the gas by centrifugal force of the rotation of the rotary shaft member 162.

In a later described degassing step, first, the liquid stored in the storage unit 150 flows in the inlet passage 166 of the degassing unit 160 via the second circulation path r2 while the rotary shaft member 162 is rotated. Here, the inlet passage 166 has a choke structure to narrow the path of the flowing liquid and then open the path. Consequently, the liquid flowing in a casing 161 is decompressed and the gas dissolved in the liquid is deposited by a decompressing function. Thus, the gas-liquid mixture is introduced in the inducer 164.

In the gas-liquid mixture introduced in the inducer 164, a liquid component is expanded to the outer periphery side in the casing 161 by the function of the impellers of the inducer 164 rotated by the rotary shaft member 162. On the other hand, a gas component is concentrated on the center side (rotary shaft member 162 side) in the casing 161. Thus, the liquid component and the gas component are separated. Furthermore, inside the casing 161 is decompressed by the previously mentioned vacuum pump. Therefore, the gas remained in the liquid is deposited and separated as bubbles at a boundary between the liquid and the gas.

The liquid separated from the gas component is guided by the main impeller 165, and further receives the force of the outside direction by the rotation of the main impeller 165. Thus, the liquid separated from the gas component forms the flow passage directed toward the outlet passage 167 provided on the outside of the casing 161. On the other hand, the gas separated from the liquid forms the flow passage directed toward the discharge passage 168 by the suction of the vacuum pump. At that time, a part of the liquid is suctioned toward the vacuum pump side by the suction force of the vacuum pump. However, the liquid is escaped outside the casing 161 by the function of the impellers of the separate impeller 163. The escaped liquid is led toward the direction of the inducer 164 again through the outside of the casing 161.

As explained above, in the degassing unit 160, the liquid flowing from the inlet passage 166 is separated into the liquid component and the gas component, the gas is discharged from the discharge passage 168 and the liquid separated from the gas is extracted from the outlet passage 167. Consequently, the degassing unit 160 can degas the liquid.

The degassing unit 160 is so-called a gas-liquid separation device (degassing device) of inducer-type (e.g., shown in Japanese Translation of PCT International Application Publication No. 2004-058380). The degassing unit 160 can separate the gas and the liquid by centrifugal force of the impellers attached to the rotary shaft member rotating in the casing. In the above described impeller-type degassing device, since the degassing can be continuously performed, batch processing is not required, unlike the degassing device using heating or decompressing. In addition, the problem caused by pressure environments occurs in other centrifugal separation-type devices can be resolved.

Accordingly, the degassing unit 160 is suitable for cooperating with the device that can control the pressure of the liquid and is required to be continuously operated. For example, the degassing unit 160 is suitable for cooperating with the superfine bubble generating unit 120 of the present embodiment. However, the degassing unit 160 can be other devices such as a pressurizing-type device, a decompressing-type device and a centrifugal separation-type device as long as the degassing unit 160 can remove the gas contained in the liquid, especially the dissolved oxygen. The degassing device functions as the degassing unit for degassing the gas and bubbles dissolved in the liquid. In addition, the degassing unit 160 also functions as a defoaming unit.

As explained above, in the first system 100 for manufacturing bubble-containing liquid, the liquid inlet unit 101 is connected to the storage unit 150 via the homogenization unit 110. The gas inlet unit 102 is connected to the homogenization unit 110 and the bubble generating unit 130.

The bubble generating unit 130, the bubble collapsing unit 140 and the storage unit 150 are incorporated in the first circulation path r1, the storage unit 150 is connected to the bubble generating unit 130, the bubble generating unit 130 is connected to the bubble collapsing unit 140, and the bubble collapsing unit 140 is connected to the storage unit 150. Namely, the first circulation path r1 is formed so that the liquid stored in the storage unit 150 is recirculated to the storage unit 150 again after passing through the bubble generating unit 130 and the bubble collapsing unit 140.

In addition, the storage unit 150 is incorporated in the second circulation path r2 and connected to the degassing unit 160. Accordingly, the second circulation path r2 is formed so that the liquid introduced from the liquid inlet unit 101 is introduced in the storage unit 150 and circulated via the degassing unit 160.

### [Second system for manufacturing bubble-containing liquid]

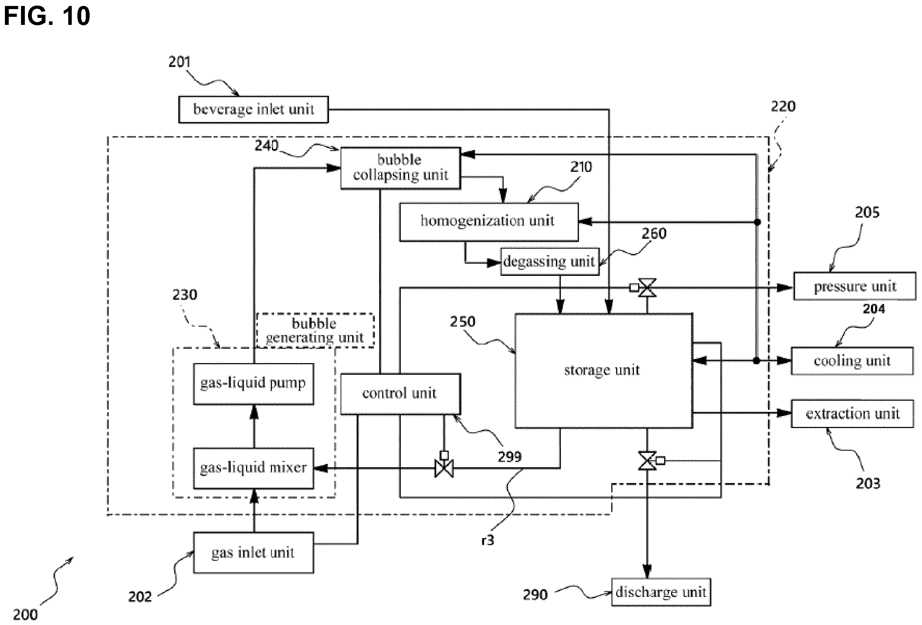

A second system 200 for manufacturing bubble-containing liquid concerning the embodiment of the present invention will be explained with reference to Fig. 10. Fig. 10 shows a functional block diagram of the system 200 for manufacturing bubble-containing liquid. Similar to the first system 100 for manufacturing bubble-containing liquid, the system 200 for manufacturing bubble-containing liquid will be explained by applying the system to the manufacture of beverage represented by milk, fruit juice or the like as an example. However, the system can be also applied to the manufacture of the bubble-containing liquid other than the beverage.

The system 200 for manufacturing bubble-containing liquid mainly includes a homogenization unit 210 that homogenizes a liquid, a bubble generating unit 230 that manufactures bubble-containing liquid, a bubble collapsing unit 240 that collapses the fine bubbles contained in the bubble-containing liquid, a storage unit 250 that stores the bubble-containing liquid, and a degassing unit 260 that degasses the liquid. The bubble generating unit 230, the bubble collapsing unit 240 and the storage unit 250 form a superfine bubble generating unit 220.

In the present embodiment, similar to the superfine bubble generating unit 120 of the first system 100 for manufacturing bubble-containing liquid, the superfine bubble generating unit 220 can be an integrally formed device formed by the bubble generating unit 230, the bubble collapsing unit 240, the storage unit 250 and other components. Otherwise, the bubble generating unit 230, the bubble collapsing unit 240, the storage unit 250 and other components can be separately provided in the system 200 for manufacturing bubble-containing liquid as long as the superfine bubbles can be generated in the liquid. It is not necessary to unitize the superfine bubble generating unit 220.

Similarly, the homogenization unit 210 can be integrally unitized or can be not-unitized as long as the homogenization unit 210 has a function of dispersing and homogenizing the particles contained in the liquid. In addition, the degassing unit 260 can be unitized or can be not-unitized as long as the degassing unit 260 can remove the gas component contained in the liquid. Namely, the components of the system 200 for manufacturing bubble-containing liquid can be integrally unitized or can be not-unitized as long as they have predetermined functions.

In addition, the system 200 for manufacturing bubble-containing liquid includes a liquid inlet unit 201 that introduces the liquid into the storage unit 250, a gas inlet unit 202 that introduces the gas into the bubble generating unit 230, an extraction unit 203 that extracts the liquid out of the storage unit 250, a cooling unit 204 that supplies a cooling water to predetermined components, a pressure unit 205 that pressurizes the storage unit 250, and a discharge unit 206 that discharges the liquid out of the storage unit 250.

In the present embodiment, the liquid inlet unit 201 can introduce the beverage (raw milk) as the liquid, and the gas inlet unit 202 can introduce the carbon dioxide gas or the nitrogen gas. However, the liquid and the gas to be introduced can be other materials.
In addition, the components are controlled by a control unit 299 for centrally managing the system 200 for manufacturing bubble-containing liquid. The control unit 299 can control the system for manufacturing bubble-containing liquid in coordination with an external control device.

The second system 200 for manufacturing bubble-containing liquid has the same components as the first system 100 for manufacturing bubble-containing liquid but the connection relation of the components is different. Accordingly, in the explanation of the present embodiment, the explanation of the common configuration with other embodiments is omitted and only the different configuration will be explained in detail.

In the system 200 for manufacturing bubble-containing liquid, the liquid inlet unit 201 is connected to the storage unit 250 without interposing the homogenization unit 210, and the gas inlet unit 202 is connected only to the bubble generating unit 230 without being connected to the homogenization unit 210. Furthermore, the homogenization unit 210 is provided on the latter stage of the bubble collapsing unit 240.

In addition, the degassing unit 260 is not incorporated in the original circulation path and is provided between the homogenization unit 210 and the storage unit 250. The degassing unit 260 is incorporated in and connected to a third circulation path r3 for circulating the liquid stored in the storage unit 250.

Namely, the third circulation path r3 is formed so that the liquid stored in the storage unit 250 is recirculated to the storage unit 250 again after passing through the bubble generating unit 230, the bubble collapsing unit 240, the homogenization unit 210 and the degassing unit 260. The operation of the bubble generating unit 230, the bubble collapsing unit 240, the homogenization unit 210 and the degassing unit 260 of the third circulation path r3 is controlled. When they are not operated, they function as the passage of the liquid.

Although the first and second systems for manufacturing bubble-containing liquid can have various configurations, the oxygen dissolved in the liquid can be substituted by nitrogen when the first and second systems at least have the degassing unit and the superfine bubble generating unit. In addition, the superfine bubble generating unit can be a device of generating the superfine bubbles by using other means without limited to the ultrasonic collapsing.

### [Third system for manufacturing bubble-containing liquid]

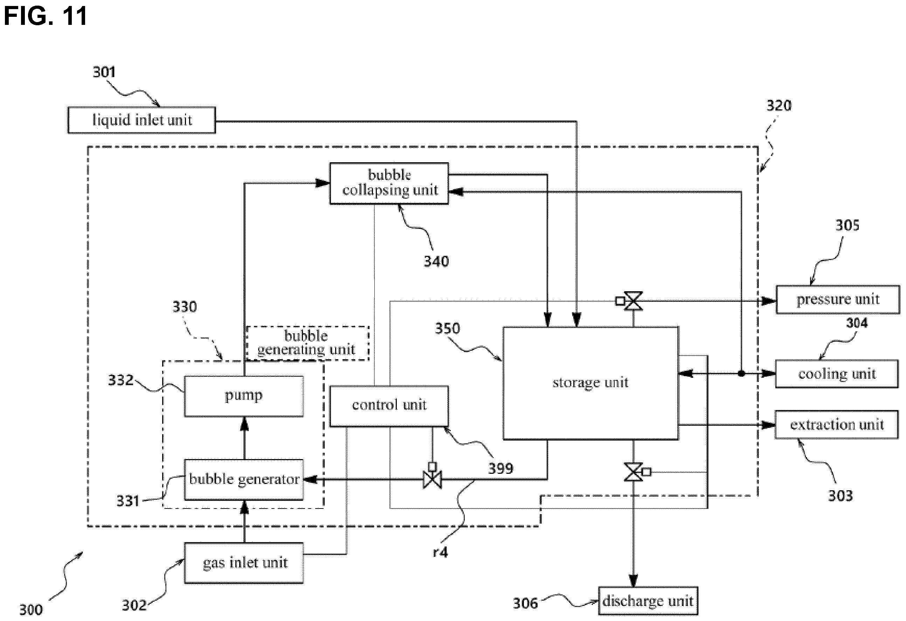

A third system 300 for manufacturing bubble-containing liquid concerning the embodiment of the present invention will be explained with reference to Fig. 11. Fig. 11 shows a functional block diagram of the system 300 for manufacturing bubble-containing liquid. Different from the first and second systems 100, 200 for manufacturing bubble-containing liquid, the system 300 for manufacturing bubble-containing liquid will be explained by applying the system to the manufacture of pure water containing ozone gas as an example. However, the system can be also applied to the manufacture of the bubble-containing liquid other than the pure water.

The system 300 for manufacturing bubble-containing liquid mainly includes a bubble generating unit 330 that manufactures bubble-containing liquid, a bubble collapsing unit 340 that collapses the fine bubbles contained in the bubble-containing liquid, and a storage unit 350 that stores the bubble-containing liquid. The bubble generating unit 330, the bubble collapsing unit 340 and the storage unit 350 form a superfine bubble generating unit 320. In the present embodiment, different from the first and second systems 100, 200 for manufacturing bubble-containing liquid, the system 300 for manufacturing bubble-containing liquid does not have the homogenization unit and the degassing unit.

In the present embodiment, similar to the superfine bubble generating units 120, 220 of the first and second systems 100, 200 for manufacturing bubble-containing liquid, the superfine bubble generating unit 320 can be an integrally formed device formed by the bubble generating unit 330, the bubble collapsing unit 340, the storage unit 350 and other components. Otherwise, the bubble generating unit 330, the bubble collapsing unit 340, the storage unit 350 and other components can be separately provided in the system 300 for manufacturing bubble-containing liquid as long as the superfine bubbles can be generated in the liquid. It is not necessary to unitize the superfine bubble generating unit 320.

In addition, the system 300 for manufacturing bubble-containing liquid includes a liquid inlet unit 301 that introduces the liquid into the storage unit 350, a gas inlet unit 302 that introduces the gas into the bubble generating unit 330, an extraction unit 303 that extracts the liquid out of the storage unit 350, a cooling unit 304 that supplies a cooling water to predetermined components, a pressure unit 305 that pressurizes the storage unit 350, and a discharge unit 306 that discharges the liquid out of the storage unit 350. In the system 300 for manufacturing bubble-containing liquid, the liquid inlet unit 301 is directly connected to the storage unit 350, and the gas inlet unit 302 350 is connected only to the bubble generating unit 330.

In the present embodiment, the liquid inlet unit 301 can introduce the pure water as the liquid, and the gas inlet unit 302 can introduce the ozone gas. However, the liquid and the gas to be introduced can be other materials. For example, hydrogen gas can be introduced for manufacturing hydrogen water. In addition, the components are controlled by a control unit 399 for centrally managing the system 300 for manufacturing bubble-containing liquid. The control unit 399 can control the system for manufacturing liquid in coordination with an external control device.

The system 300 for manufacturing bubble-containing liquid is different from the systems 100, 200 for manufacturing bubble-containing liquid in that the homogenization unit and the degassing unit are not provided. Accordingly, in the explanation of the present embodiment, the explanation of the common configuration with other embodiments is omitted and only the different configuration will be explained in detail.

In the present embodiment, a fourth circulation path r4 is formed so that the liquid stored in the storage unit 350 is recirculated to the storage unit 350 250 again after passing through the bubble generating unit 330 and the bubble collapsing unit 340. Accordingly, the fourth circulation path r4 is formed so that the liquid stored in the storage unit 350 is recirculated to the storage unit 350 again after passing through the bubble generating unit 330 and the bubble collapsing unit 340. Thus, the configuration is similar to the first circulation path of the first system 100 for manufacturing bubble-containing liquid.

### [Modified example of bubble generating unit]

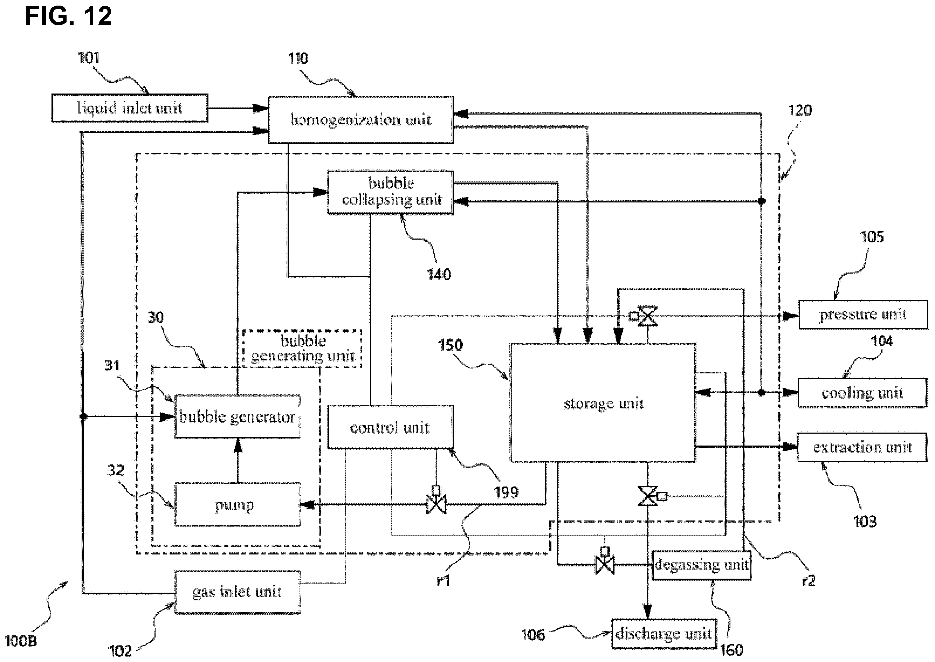

A bubble generating unit 30 which is a modified example of the bubble generating unit of the first to third systems 100, 200, 300 for manufacturing bubble-containing liquid concerning the embodiment of the present invention will be explained using Fig. 12. Fig. 12 shows a functional block diagram of a system 100B for manufacturing bubble-containing liquid using the bubble generating unit 30 concerning the modified example.

In the modified example, the system 100B for manufacturing bubble-containing liquid has the bubble generating unit 30 instead of the bubble generating unit 130, and the bubble generating unit 30 has a different connection relation with respect to a bubble generator 31 and a pump 32 compared to the bubble generating unit 130.

In the bubble generating unit 30, a pump 31 is arranged in the upstream of the bubble generator 31, the storage unit 150 is connected to the pump 32, and the bubble collapsing unit 140 is connected to the bubble generator 31. In addition, the gas inlet unit 102 is connected to the bubble generator 31.

In detail, the bubble generator 31 is a bubble generation nozzle similar to the bubble generator 131, the pump 31 is connected to the liquid supply hole of the bubble generation nozzle, the gas inlet unit 102 is connected to the gas supply hole of the bubble generation nozzle, and the bubble collapsing unit 140 is connected to the jet hole.

Accordingly, in the present modified example, the bubble-containing liquid is supplied from the storage unit 150 to the pump 32, and the bubble-containing liquid is pressurized in the pump 32 and introduced in the bubble generator 31. Then, the bubble-containing liquid is mixed with the gas supplied from the gas inlet unit 102 in the bubble generator 31, and the fine bubbles are generated while loop flow is formed. And then, the bubble-containing liquid in which the fine bubbles are generated is supplied to the bubble collapsing unit 140.

### [Modified example of the storage unit]

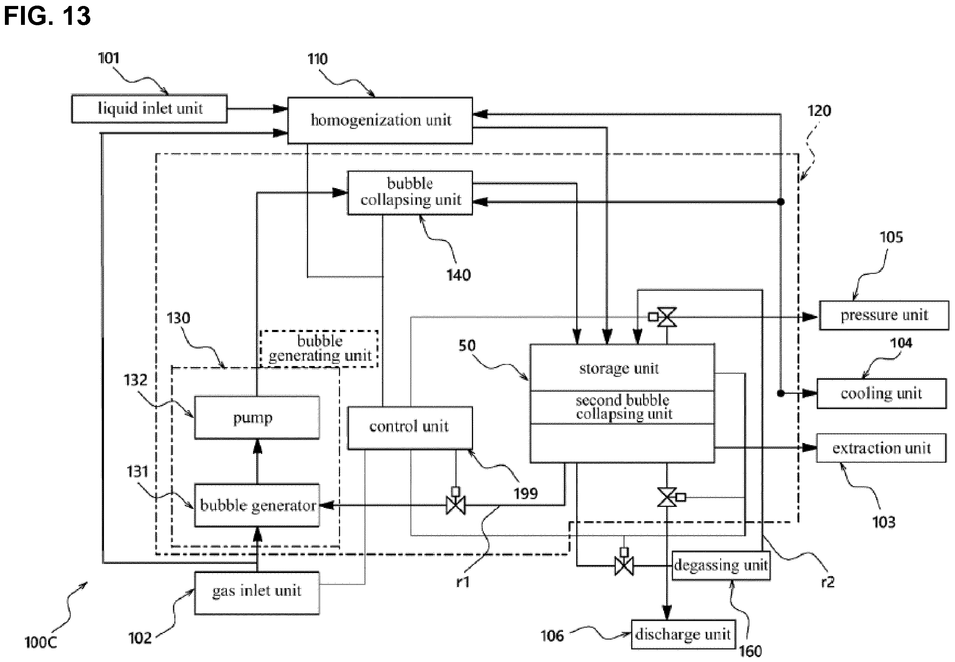

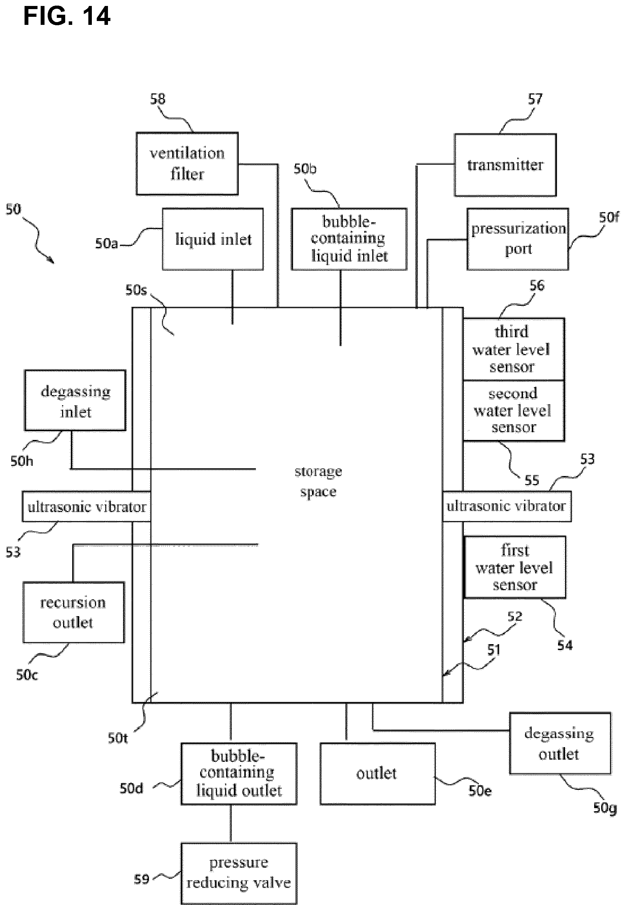

A storage unit 50 which is a modified example of the storage unit of the first to third systems 100, 200, 300 for manufacturing bubble-containing liquid concerning the embodiment of the present invention will be explained with reference to Fig. 13 and Fig. 14. Fig. 13 shows a functional block diagram of a system 100C for manufacturing bubble-containing liquid using the storage unit 50 concerning the modified example.

Different from the storage unit 150, 250, 350 of the first, second, third systems 100, 200, 300 for manufacturing bubble-containing liquid, the storage unit 50 has a plurality of ultrasonic vibrators 51 that enable to irradiate the stored bubble-containing liquid with the ultrasonic wave. Accordingly, the storage unit 50 also functions as a second ultrasonic collapsing unit.

Fig. 14 shows a functional block diagram of the storage unit 50. As shown in Fig. 14, the storage unit 50 is mainly formed by an inner container 51 and an outer container 52 covering the inner container 51 to have a two-layer structure. In addition, the storage unit has a plurality of ultrasonic vibrators 53 for irradiating the inner container 51 with the ultrasonic wave. The inner container 51 forms a storage space 50s having a predetermined capacity for storing the bubble-containing liquid.

The inner container 51 is formed in a hexagonal columnar shape and a completely hermetically sealed structure. Consequently, a trace gas generated when the bubbles are collapsed by the ultrasonic wave in the bubble collapsing unit 140 is not in contact with the air even if the trace gas flows in the storage unit 50. In addition, since the inner container 51 has a hermetically sealed structure, the pressure in the storage unit 50 can be controlled.

Similar to the storage unit 150 of the first system 100 for manufacturing bubble-containing liquid, the storage unit 50 further includes a liquid inlet 50a connected to the liquid inlet unit 101, a bubble-containing liquid inlet 50b connected to the bubble collapsing unit 140, a recirculation outlet 50c connected to the bubble generating unit 130, a bubble-containing liquid outlet 50d connected to the extraction unit 103, an outlet 50e connected to the discharge unit 106, a pressurization port 50f connected to the pressure unit 105, a degassing outlet 50g connected to the inlet passage 166 of the degassing unit 160, and a degassing inlet 50h connected to the outlet passage 167 of the degassing unit 160. These components are formed to function as the passage of the inner container 51.

The liquid inlet 50a is mainly formed by a cylindrical pipe. The liquid inlet 50a communicates from the upper surface of the inner container 51 to inside the inner container 51 to introduce stock solution from the liquid inlet unit 101 into the top surface position of the inner container 51. Consequently, the liquid is supplied from an upper side of the storage space 50s. In addition, the pressurization port 50f is mainly formed by a cylindrical pipe. The pressurization port 50f extends from the upper surface of the inner container 51 to inside the inner container 51 to apply the pressure applied from the pressure unit 105 in the storage space 50s of the inner container 51.

The bubble-containing liquid inlet 50b is mainly formed by a cylindrical pipe. The bubble-containing liquid inlet 50b extends from the upper surface of the inner container 51 to a half height position from the bottom surface of the inner container 51 to supply the second bubble-containing liquid from an upper side of the inner container 51.

The pipe of the bubble-containing liquid inlet 50b extends in a vertical direction and is bent in a horizontal direction at the lower side to form an L-shape. The bubble-containing liquid is discharged in the horizontal direction. Because of this, the bubble-containing liquid is stirred in the storage space 50s by receiving the discharge pressure horizontally. However, the bubble-containing liquid does not receive the discharge pressure vertically. Thus, the bubbles having a small particle diameter are not prevented from being concentrated at the bottom of the storage space.

The recirculation outlet 50c is mainly formed by a cylindrical pipe. The recirculation outlet 50c extends from the bottom portion of the inner container 51 to a quarter height position from the bottom portion of the inner container 51. The recirculation outlet 50c discharges the bubble-containing liquid stored in a quarter height position from the bottom portion of the inner container 51 to the first circulation path r1 and the bubble-containing liquid is recirculated to the gas-liquid mixer 131.

The pipe of the recirculation outlet 50c extends in a vertical direction and is bent in a horizontal direction at the upper side to form an inverted L-shape. The bubble-containing liquid is sucked in the horizontal direction. Because of this, the bubble-containing liquid is stirred in the storage space 50s by receiving the suction pressure horizontally. However, the bubble-containing liquid does not receive the suction pressure vertically. Thus, the bubbles having a small particle diameter are not prevented from being concentrated at the bottom of the storage space.

The bubble-containing liquid outlet 50d is mainly formed by a cylindrical pipe. The bubble-containing liquid outlet 50d is provided on the bottom portion of the inner container 51 as a bottom valve to extract the bubble-containing liquid from the bottom of the inner container 51. The bubble-containing liquid outlet 50d is connected to the extraction unit 103 via a pressure reducing valve 59.

Consequently, the bubble-containing liquid pressurized in the storage space 50s is discharged to the extraction unit 103 via the pressure reducing valve 59 while the pressure is reduced. Thus, further concentrated bubble-containing liquid can be extracted from the storage space 50s. In addition, conventionally well-known pressure reducing valve such as a direct-acting pressure reducing valve and a pilot-operated pressure reducing valve can be used as the pressure reducing valve 59.

The outlet 50e is mainly formed by a cylindrical pipe. The outlet 50e is provided on the bottom portion of the inner container 51 as a bottom valve to discharge the bubble-containing liquid from the bottom of the inner container 51. The outlet 50e is connected to the extraction unit 103.

The degassing outlet 50g is mainly formed by a cylindrical pipe. The degassing outlet 50g is provided on the bottom portion of the inner container 51 as a bottom valve to discharge the bubble-containing liquid from the bottom of the inner container 51 to a second circulation path r2 and supply the bubble-containing liquid from the storage space 50s to the inlet passage 166 of the degassing unit 160.

The degassing inlet 50h is mainly formed by a cylindrical pipe. The degassing inlet 50h extends from the upper surface of the inner container 51 to a half height position from the bottom surface of the inner container 51 to introduce the bubble-containing liquid degassed in the degassing unit 160 from the outlet passage 167 of the degassing unit 160 to the storage space 50s.

Furthermore, three water level sensors 54, 55, 56 are provided on the storage unit 50. The first water level sensor 54 is provided on one-third height position from the bottom portion of the inner container 51 to detect that the liquid is filled to one third of the storage space 50s. The second water level sensor 55 is provided on seven-tenths height position from the bottom portion of the inner container 51 to detect that the liquid is filled to seven-tenths of the storage space 50s. The third water level sensor 56 is provided on four-fifths height position from the bottom portion of the inner container 51 to detect that the liquid is filled to eight-tenths of the storage space 50s. As described later, the control unit 199 controls the flow rate of the inlets and the outlets provided on the storage unit 50 based on the detecting and not detecting state of the water level sensors. Thus, the amount of the bubble-containing liquid in the storage space 50s is adjusted.

Furthermore, the storage unit 50 includes a pressure transmitter 57 for measuring the pressure and a ventilation filter 58 for releasing the storage space 50s in the tank container to the atmospheric pressure. The pressure transmitter 57 is provided on the tank container 51 and electrically connected to the control unit 199 to measure the pressure of the storage space 50s. The ventilation filter 58 is provided on the inner container 51 and electrically connected to the control unit 199 to adjust the pressure in the storage space 50s while securing a ventilation passage from the storage space 50s.

In addition, the pressure of the pressurized storage space 50s can be adjusted by the ventilation filter 58. The control unit 160 measures the pressure of the storage space 50s by the pressure transmitter 57 and adjusts the pressure to a predetermined value by the pressure unit 105 and the ventilation filter 58. In the present embodiment, the pressure unit 105 can pressurize the storage space 50s to approximately 0.4 MPa to 0.6 MPa.

In the system 100 for manufacturing bubble-containing liquid of the present embodiment, the superfine bubble generating unit 120 is separated from the storage unit 50. Consequently, the bubble generating unit 120 continuously supplies a predetermined amount of the bubble-containing liquid having a constant particle diameter without being affected by the capacity of the storage unit 50 and the bubble-containing liquid is stored in the storage unit 50. Thus, the bubbles are prevented from being aggregated in the storage unit 50.

Namely, the bubbles having a superfine particle diameter generated by the conventional ultrasonic collapsing do not have a constant diameter and it was difficult to store such bubbles since the superfine bubbles having different diameters are aggregated when stored. However, when the system 100 for manufacturing bubble-containing liquid of the present embodiment is used, the bubbles having a constant particle diameter are generated and therefore the bubble-containing liquid can be stored without being aggregated.

In addition, since a zeta potential and the like vary depending on the particle diameter in the bubbles having a superfine particle diameter, coagulation reaction may occur. However, in the system 100 for manufacturing bubble-containing liquid of the present embodiment, the bubbles having a similar particle diameter exist in the same area in the storage space 50s. Thus, the bubble-containing liquid can be stored without being aggregated.

Furthermore, the bubble-containing liquid supplied from the bubble collapsing unit 140 is stored in the inner container 51. In the bubble-containing liquid, the bubble having a smaller particle diameter tends to be diffused downward. Accordingly, in the present embodiment, an NB area where so-called nanobubble having a particle diameter of nano-order dominantly exists is formed on the bottom of the storage space 50s of the inner container 51, an MN area where the nanobubble and the microbubble are mixed is formed on an upper side of the NB area, and an MB area where the microbubble dominantly exists is formed on further upper side of the MN area. The position of each area in the inner container 51 varies depending on the storage amount of the liquid.

The above described functions of the storage unit 50 of the present embodiment are same as the functions of the storage unit 150 of the first system 100 for manufacturing bubble-containing liquid. However, the storage unit 50 is different from the storage unit 150 of the first system 100 for manufacturing bubble-containing liquid in that the storage unit 50 has a plurality of ultrasonic vibrators 53 to function as the ultrasonic collapsing unit.

Each of the ultrasonic vibrators 53 is mounted on each side surface of the hexagonal columnar shape of the inner container 51 to emit the ultrasonic wave toward the center of the storage space 50s. The ultrasonic wave emitted from the ultrasonic vibrators 53 is transmitted inside the inner container 51 to collapse the bubbles of the bubble-containing liquid stored in the inner container 51. Here, six ultrasonic vibrators 53 are provided on one-third height position from the bottom portion of the inner container 51. The pipes such as the bubble-containing liquid inlet 50b and the recirculation outlet 50c are not extended on the above described position. Since the ultrasonic vibrators 53 are arranged on the above described position, the ultrasonic field for collapsing bubbles can be formed without obstruction.

In particular, a pair of vibrators is formed by two opposite ultrasonic vibrators 53 and three pairs of vibrators are formed by six ultrasonic vibrators 53 in the present embodiment. Each of the six ultrasonic vibrators 53 emits the ultrasonic wave toward one point of the center of storage space 50s. Accordingly, each of the ultrasonic vibrators 53 emits the ultrasonic wave from different side surface positions and to different positions inward in the radial direction so as to be directed to the center of the storage space 50s.

Consequently, the ultrasonic field for collapsing bubbles is formed on the position where the bubble having a smaller particle diameter moved downward in the bubble-containing liquid. Namely, the ultrasonic field is formed on the center of the storage space 50s. In addition, the inner container 51 is made of stainless to reflect the ultrasonic wave emitted from the ultrasonic vibrators 53. As a result, the energy caused by the reflection of the ultrasonic wave is added and the ultrasonic field for collapsing bubbles becomes stronger.

A frequency and an output of each of the ultrasonic vibrators can be adjusted by the control unit 199. In the present embodiment, the ultrasonic wave emitted from six ultrasonic vibrators 53 has the same frequency and the same output.

Here, the frequency of the ultrasonic vibrators 53 provided on the storage unit 50 is set lower than the frequency of the ultrasonic vibrators 143 provided on the bubble collapsing unit 140. Consequently, the ultrasonic wave can be surely propagated to even the storage space 50s of the storage unit 50 having larger cross-sectional area than the passage 141 of the bubble collapsing unit 140.

The storage unit 50 concerning the above described modified example forms an ultrasonic field for collapsing bubbles to collapse the fine bubbles contained in the liquid and convert the fine bubbles into the superfine bubbles. The ultrasonic field for collapsing bubbles is formed by being continuously irradiated with the ultrasonic wave, and ultraviolet rays are generated on the ultrasonic field for collapsing bubbles. Consequently, sterilization effect can be obtained by the ultraviolet rays when the liquid passes through the ultrasonic field for collapsing bubbles.

Furthermore, since the liquid is irradiated with the ultrasonic wave forming the ultrasonic field for collapsing bubbles in the storage unit 50, numerous vacuum bubbles are generated by the cavitation in the liquid. When the vacuum bubbles are collapsed by repeating compression and expansion, a reaction field having an extremely high temperature and high pressure is formed. In the reaction field, cell walls of the bacteria are destroyed when the vacuum bubbles are burst. Thus, sterilization effect can be obtained to sterilize heat resistant spore forming bacteria such as Staphylococcus aureus and Bacillus cereus in addition to general viable bacteria, Legionella bacteria, Escherichia coli and the like.

The above described sterilization effect is also obtained in the bubble collapsing unit 140 as explained before. However, since the same sterilization effect can be obtained in the storage unit 50 provided downstream of the bubble collapsing unit 140, the storage unit 50 can perform the sterilization surely even when the sterilization of the bubble collapsing unit is not enough. Namely, in the system 100C for manufacturing bubble-containing liquid of the present embodiment, the effect of the ultrasonic sterilization can be maximized.

### [First method for manufacturing bubble-containing liquid]

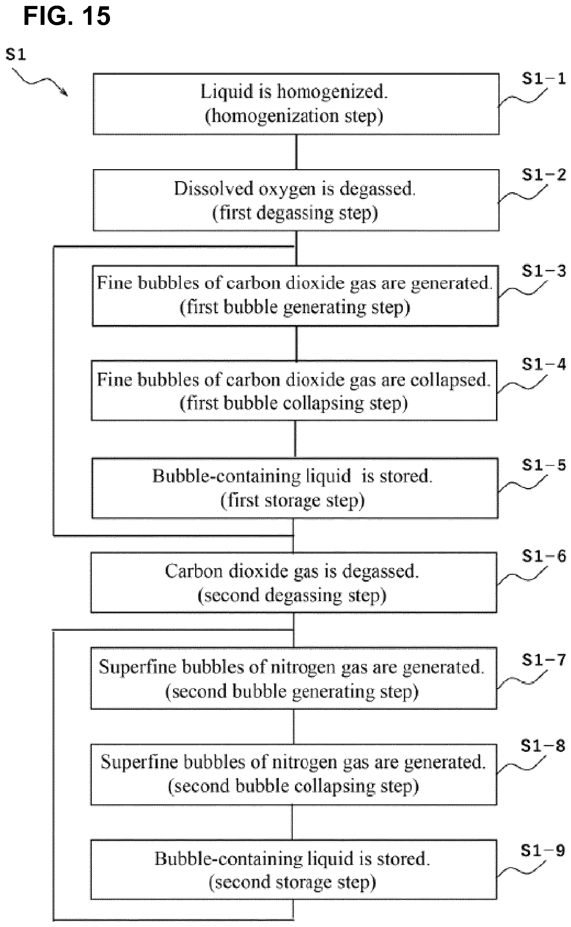

Next, a first method S1 for manufacturing bubble-containing liquid concerning the embodiment of the present invention will be explained with reference to Fig. 15. Fig. 15 shows a flowchart of the method S1 for manufacturing bubble-containing liquid. In the method S1 for manufacturing bubble-containing liquid, the method for manufacturing bubble-containing liquid will be explained using the system 100 for manufacturing bubble-containing liquid.

First, the liquid is homogenized (homogenization step: S1-1).
The beverage is introduced as the liquid in the system 100 for manufacturing bubble-containing liquid via the liquid inlet unit 101. The liquid introduced in the system 100 for manufacturing bubble-containing liquid is temporarily stored in the storage unit 150 via the homogenization unit 110.

In the above described step, particles contained in the beverage is micronized and homogenized. At that time, in addition to the liquid, the carbon dioxide gas can be also introduced in the homogenization unit 110 as the bubbles from the gas inlet unit 102 so that the carbon dioxide gas is micronized together with the particles and the bubble-containing liquid containing the fine bubbles of the carbon dioxide is supplied to the storage unit 150.

Then, the dissolved oxygen is degassed from the bubble-containing liquid stored in the storage unit (first degassing step: S1-2). Specifically, the beverage stored in the storage unit 150 is circulated through the second circulation path r2 incorporated with the degassing unit 160. Thus, the beverage is degassed in the degassing unit 160.

In the above described step, the dissolved oxygen is degassed from the liquid to decrease the concentration of the dissolved oxygen. The oxygen concentration becomes constant when the beverage is circulated through the second circulation path r2 for a predetermined time or longer. The first degassing step can be performed in parallel with the homogenization step.

Then, the fine bubbles of the carbon dioxide gas are generated in the liquid (first bubble generating step: S1-3). Specifically, the liquid stored in the storage unit 150 is supplied to the bubble generating unit 130 via the first circulation path r1 incorporated with the bubble generating unit 130. Thus, the fine bubbles are generated in the bubble generator 131 of the bubble generating unit 130.

In the above described step, the liquid is introduced in the bubble generator 131 from the storage unit 150 and the carbon dioxide gas is introduced in the bubble generator 131 from the gas inlet unit 102 to generate the fine bubbles of the carbon dioxide gas. At that time, since the concentration of the gas dissolved in the liquid is decreased in the first degassing step, the carbon dioxide gas can be easily dissolved in the liquid.

Then, the fine bubbles of the carbon dioxide gas are collapsed (first bubble collapsing step: S1-4). Specifically, the bubble-containing liquid containing the fine bubbles of the carbon dioxide gas generated in the bubble generating unit 130 is supplied to an ultrasonic collapsing unit 140, and the bubble-containing liquid is irradiated with the ultrasonic wave when passing through the passage 141 of the ultrasonic collapsing unit 140. Thus, the fine bubbles are collapsed by the ultrasonic wave and converted into the superfine bubbles having a smaller particle diameter.

In the above described step, the ultrasonic field for collapsing bubbles is formed in the passage 141. The fine bubbles are collapsed when passing through the ultrasonic field for collapsing bubbles without unevenness. After passing through the bubble collapsing unit 140, the bubble-containing liquid is recirculated to the storage unit 150.

Then, the bubble-containing liquid containing the superfine bubbles is stored (first storage step: S1-5). Specifically, the bubble-containing liquid containing the superfine bubbles is supplied from the ultrasonic collapsing unit 140 and a part of the bubble-containing liquid is supplied to the bubble generating unit 130 again while the other is stored in the storage unit 150.

Accordingly, the first bubble generating step (S1-3), the first bubble collapsing step (S1-4) and the first storage step (S1-5) are repeated a plurality of times by using the first circulation path r1. In the first superfine bubble generating step comprised of the first bubble generating step (S1-3), the first bubble collapsing step (S1-4) and the first storage step (S1-5), the amount of the superfine bubbles of the carbon dioxide gas becomes constant when the liquid is circulated through the first circulation path r1 for a predetermined time or longer.

In the first storage step (S1-5), the bubble having a smaller particle diameter is concentrated on the bottom of the bubble-containing liquid stored in the storage space 150s of the storage unit 150. Thus, an NB area where so-called nanobubble having a particle diameter of nano-order dominantly exists is formed on the bottom of the tank container 151, an MN area where the nanobubble and the microbubble are mixed is formed on an upper side of the NB area, and an MB area where the microbubble dominantly exists is formed on further upper side of the MN area.

Then, the carbon dioxide gas is degassed from the bubble-containing liquid stored in the storage unit 150 (second degassing step: S1-6). Specifically, the bubble-containing liquid stored in the storage unit 150 is circulated through the second circulation path r2 incorporated with the degassing unit 160. Thus, the bubble-containing liquid is degassed in the degassing unit 160 (S1-6).

In the above described step, the carbon dioxide gas is degassed from the liquid to decrease the concentration of the carbon dioxide gas. The concentration of the carbon dioxide gas becomes constant when the liquid is circulated through the second circulation path r2 for a predetermined time or longer.

Then, the fine bubbles of the nitrogen gas are generated in the liquid (second bubble generating step: S1-7). Specifically, after the carbon dioxide gas is degassed, the liquid stored in the storage unit 150 is supplied to the bubble generating unit 130 via the first circulation path r1 incorporated with the bubble generating unit 130. Thus, the fine bubbles are generated in the bubble generator 131 of the bubble generating unit 130.

In the above described step, the liquid is introduced in the bubble generator 131 from the storage unit 150 and the nitrogen gas is introduced in the bubble generator 131 from the gas inlet unit 102 to generate the fine bubbles of the nitrogen gas. At that time, since the concentration of the gas dissolved in the liquid is decreased in the first degassing step, the nitrogen gas can be easily dissolved in the liquid.

Then, the fine bubbles of the nitrogen gas are collapsed (second bubble collapsing step: S1-8). Specifically, the bubble-containing liquid containing the fine bubbles of the nitrogen gas generated in the bubble generating unit 130 is supplied to the ultrasonic collapsing unit 140, and the bubble-containing liquid is irradiated with the ultrasonic wave when passing through the passage 141 of the ultrasonic collapsing unit 140. Thus, the fine bubbles are collapsed by the ultrasonic wave and converted into the superfine bubbles having a smaller particle diameter.

In the above described step, the ultrasonic field for collapsing bubbles is formed in the passage 141. The fine bubbles are collapsed when passing through the ultrasonic field for collapsing bubbles without unevenness. After passing through the bubble collapsing unit 140, the bubble-containing liquid is recirculated to the storage unit 150.

Then, the bubble-containing liquid containing the superfine bubbles of the nitrogen gas is stored (second storage step: S1-9). Specifically, the bubble-containing liquid containing the superfine bubbles is supplied from the ultrasonic collapsing unit 140 and a part of the bubble-containing liquid is supplied to the bubble generating unit 130 again while the other is stored in the storage unit 150.

Accordingly, the second bubble generating step (S1-7), the second bubble collapsing step (S1-8) and the second storage step (S1-9) are repeated a plurality of times by using the second circulation path r1. In the second superfine bubble generating step comprised of the second bubble generating step (S1-7), the second bubble collapsing step (S1-8) and the second storage step (S1-9), the amount of the superfine bubbles of the carbon dioxide gas becomes constant when the liquid is circulated through the first circulation path r1 for a predetermined time or longer.

In the second storage step (S1-9), the bubble having a smaller particle diameter is concentrated on the bottom of the bubble-containing liquid stored in the storage space 150s of the storage unit 150. Thus, an NB area where so-called nanobubble having a particle diameter of nano-order dominantly exists is formed on the bottom of the tank container 151, an MN area where the nanobubble and the microbubble are mixed is formed on an upper side of the NB area, and an MB area where the microbubble dominantly exists is formed on further upper side of the MN area.

Then, the bubble-containing liquid stored in the storage unit 150 is extracted from the extraction unit 103. The component of the carbon dioxide contained in the liquid can be almost completely eliminated from the liquid before being extracted from the storage unit 150 by the function of the degassing unit 160 and the substitution into the superfine bubbles of nitrogen bubbles.

In the above explanation of the method S1 for manufacturing bubble-containing liquid, the method for manufacturing bubble-containing liquid using the system 100 for manufacturing bubble-containing liquid is explained. However, the method S1 for manufacturing bubble-containing liquid can be performed by using other systems. For example, the method S1 can be performed by using the system 200 for manufacturing bubble-containing liquid.

When the method S1 for manufacturing bubble-containing liquid is performed by using the system 200 for manufacturing bubble-containing liquid, the homogenization unit 210 is provided on the former stage of a degassing unit 230 in the third circulation path r3. Accordingly, the homogenization can be performed by applying high pressure to the liquid immediately before performing the degassing by the degassing unit 230.

In the homogenization unit 210, high pressure is applied to the liquid and the temperature of the liquid increases when the liquid passes through the fine gaps of the homogeneous valve and eject from the fine gaps. Because of this, high-temperature liquid is supplied to the degassing unit 230. Thus, the homogenization step performed by the homogenization unit 210 also functions as a heating step. According to Henry's law, the concentration of the dissolved gas decreases in the high-temperature liquid. Thus, degassing performance is improved.

In the method S1 for manufacturing bubble-containing liquid, nitrogen substitution is performed before a heat sterilization step. Consequently, the oxygen dissolved in the liquid is substituted by stable nitrogen. Thus, even when the liquid is heat-sterilized in the later step, reaction of generating burnt smell or other flavor-spoiling reactions are suppressed.

In the method S1 for manufacturing bubble-containing liquid, the first bubble generating step and the second degassing step are included between the first degassing step and the second bubble generating step. However, the first bubble generating step and the second degassing step can be omitted in the method for manufacturing liquid. In such a case, the nitrogen bubble generating step can be performed immediately after the first degassing step. Basically, the degassing step and the bubble generating step are not simultaneously performed.

In the method S1 for manufacturing bubble-containing liquid, the superfine bubbles of the carbon dioxide gas are generated in the liquid. Here, it is known that the carbon dioxide gas has sterilization effect when combined with water. Thus, the liquid containing the fine bubbles or the superfine bubbles of the carbon dioxide gas has an effect of sterilizing heat-resistant bacteria although it is difficult to sterilize the heat-resistant bacteria by the heat sterilization.

In the method S1 for manufacturing bubble-containing liquid, the superfine bubbles of the carbon dioxide gas or the nitrogen gas are generated by the irradiation of the ultrasonic wave. Here, when the liquid is irradiated with the ultrasonic wave, bubbles called cavitation bubbles are generated. It is known that sterilization effect can be obtained when the cavitation bubbles are collapsed by repeating compression and expansion since shock wave is generated and cell walls of the bacteria are destroyed. Consequently, the liquid has an effect of sterilizing heat-resistant bacteria although it is difficult to sterilize the heat-resistant bacteria by the heat sterilization.

In the method S1 for manufacturing bubble-containing liquid, the superfine bubbles of the carbon dioxide gas or the nitrogen gas are generated by the irradiation of the ultrasonic wave. Here, it is known that ultraviolet-ray is emitted when the liquid is irradiated with the ultrasonic wave. Thus, an effect of sterilizing heat-resistant bacteria can be obtained by the sterilization effect of the ultraviolet-ray although it is difficult to sterilize the heat-resistant bacteria by the heat sterilization.

In the method S1 for manufacturing bubble-containing liquid, homogenization is performed by applying high pressure to the liquid. Here, it is known that sterilization effect can be obtained when the pressure is rapidly changed. Thus, an effect of sterilizing heat-resistant bacteria can be obtained by the sterilization effect although it is difficult to sterilize the heat-resistant bacteria by the heat sterilization.

As explained above, the method S1 for manufacturing bubble-containing liquid can sterilize the heat-resistant bacteria represented by Bacillus cereus by the sterilization effect of other than the heat sterilization. Thus, the storage period of the liquid can be significantly improved.

### [Second method for manufacturing bubble-containing liquid]

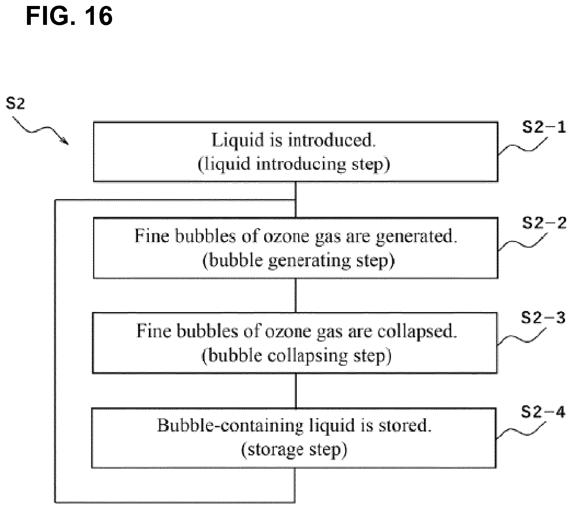

Next, a second method S2 for manufacturing bubble-containing liquid concerning the embodiment of the present invention will be explained with reference to Fig. 16. Fig. 16 shows a flowchart of the method S2 for manufacturing bubble-containing liquid. In the method S2 for manufacturing bubble-containing liquid, the method for manufacturing bubble-containing liquid will be explained using the third system 300 for manufacturing bubble-containing liquid. However, the method S2 for manufacturing bubble-containing liquid can be performed by using other systems.

First, pure water is introduced in the storage unit 350 as the liquid (liquid introducing step: S2-1). Specifically, the liquid is introduced in the system 300 for manufacturing bubble-containing liquid via the liquid inlet unit 301 and the liquid is temporarily stored in the storage unit 350.

Then, the fine bubbles of the ozone gas are generated in the pure water stored in the storage unit 350 (bubble generating step: S2-2). Specifically, the liquid stored in the storage unit 350 is supplied to the bubble generating unit 330 via the fourth circulation path r4 in which the bubble generating unit 330 is incorporated. Thus, the fine bubbles are generated in a bubble generator 331 of the bubble generating unit 330.

In the above described step, the liquid is introduced in the bubble generator 331 from the storage unit 350 and the ozone gas is introduced in the bubble generator 331 from the gas inlet unit 302 to generate the fine bubbles of the ozone gas.

Then, the fine bubbles of the ozone gas are collapsed (bubble collapsing step: S2-3). Specifically, the bubble-containing liquid containing the fine bubbles of the ozone gas generated in the bubble generating unit 330 is supplied to an ultrasonic collapsing unit 340, and the bubble-containing liquid is irradiated with the ultrasonic wave when passing through the passage of the ultrasonic collapsing unit 340. Thus, the fine bubbles are collapsed by the ultrasonic wave and converted into the superfine bubbles having a smaller particle diameter.

In the above described step, the ultrasonic field for collapsing bubbles is formed in the passage. The fine bubbles are collapsed when passing through the ultrasonic field for collapsing bubbles without unevenness. After passing through the bubble collapsing unit 340, the bubble-containing liquid is recirculated to the storage unit 350.

Then, the bubble-containing liquid containing the superfine bubbles is stored (second storage step: S2-4). Specifically, the bubble-containing liquid containing the superfine bubbles is supplied from the ultrasonic collapsing unit 340 and a part of the bubble-containing liquid is supplied to the bubble generating unit 330 again while the other is stored in the storage unit 350.

Accordingly, the bubble generating step (S2-2), the bubble collapsing step (S2-3) and the storage step (S2-4) are repeated a plurality of times by using the first circulation path r4. In the superfine bubble generating step comprised of the bubble generating step (S2-2), the bubble collapsing step (S2-3) and the storage step (S2-4), the amount of the superfine bubbles of the ozone gas becomes constant when the liquid is circulated through the fourth circulation path r4 for a predetermined time or longer.

In the storage step (S2-4), the bubble having a smaller particle diameter is concentrated on the bottom of the bubble-containing liquid stored in the storage space of the storage unit 350. Thus, an NB area where so-called nanobubble having a particle diameter of nano-order dominantly exists is formed on the bottom of the storage space, an MN area where the nanobubble and the microbubble are mixed is formed on an upper side of the NB area, and an MB area where the microbubble dominantly exists is formed on further upper side of the MN area.

Then, the bubble-containing liquid stored in the storage unit 350 is extracted from the extraction unit 303.

The liquid manufactured by the second method S2 for manufacturing bubble-containing liquid concerning the embodiment of the present invention contains the superfine bubbles. The superfine bubbles remain in the liquid for a long time of several months. Accordingly, in the liquid manufactured by the second method S2 for manufacturing bubble-containing liquid concerning the embodiment of the present invention, the superfine bubbles of the ozone gas having high sterilization property remain in the liquid. Thus, cleaning and antibacterial effects can be obtained for a long time.

### [Configurations, functions and effects]

From the embodiments of the present invention described above, the present invention has the following configurations, functions and effects.

The system for manufacturing bubble-containing liquid of the present invention has: a bubble generating unit that generates first bubbles in a liquid and supplies a first bubble-containing liquid containing the first bubbles; a bubble collapsing unit that is connected to the bubble generating unit, collapses the fine bubbles contained in the first bubble-containing liquid supplied from the bubble generating unit by making the first bubble-containing liquid pass through the bubble collapsing unit and irradiating the first bubble-containing liquid with ultrasonic wave to generate second bubbles and supplies a second bubble-containing liquid containing the second bubbles; and a storage unit that is connected to the bubble collapsing unit to store the second bubble-containing liquid supplied from the bubble collapsing unit. The bubble collapsing unit has: a passage for passing the bubble-containing liquid; and a plurality of ultrasonic vibrators for irradiating the passage with the ultrasonic wave from an outside to an inside of the passage so that directions of irradiating the passage are different among the ultrasonic vibrators.

In the above described system for manufacturing bubble-containing liquid, since the collapsing unit and the storage unit are separated, constant fine bubbles are generated by the ultrasonic field for collapsing bubbles in the passage and continuously supplied to the storage unit, and the superfine bubbles are concentrated in the storage unit. In particular, since the bubble collapsing unit generates the ultrasonic wave from different directions, the flow of the bubble-containing liquid is not interrupted and the superfine bubbles having a constant particle diameter can be efficiently supplied to the storage unit. In addition, since the superfine bubbles are supplied efficiently and continuously in the storage unit, the bubble-containing liquid can be concentrated in a short time.

In addition, at least one group of the ultrasonic vibrators can be formed by the plurality of the ultrasonic vibrators and the ultrasonic vibrators in each group can emit the ultrasonic wave toward the center of the passage. By adopting the above described configuration, since the ultrasonic wave is emitted toward the center of the passage, the flow of the bubble-containing liquid is surely prevented from being interrupted even though the ultrasonic field for collapsing bubbles is formed. Consequently, the superfine bubbles are efficiently supplied without staying in the passage.

In addition, in the ultrasonic vibrators, a the plurality pairs of vibrators can emit the ultrasonic wave toward the center of the passage from opposite directions. By adopting the above described configuration, constant field for collapsing bubbles is formed over the entire passage and the bubbles having a constant particle diameter can be surely generated.

The collapsing unit can have an outer body for covering a periphery of the passage, a propagation liquid for propagating the ultrasonic wave can be filled between the passage and the outer body, and the ultrasonic vibrators can be attached to an external side of the outer body. By adopting the above described configuration, although the ultrasonic vibrators can be easily attached, the propagation liquid surely propagates the ultrasonic wave to the passage and the bubble-containing liquid can be stably manufactured.

The system for manufacturing bubble-containing liquid of the present invention has: a storage space for storing the bubble-containing liquid; a pressure unit for pressuring the storage space; and a bubble-containing liquid outlet unit for discharging the bubble-containing liquid stored in the storage space out of the storage space. Thus, the storage space is shut off from the atmosphere and the bubble-containing liquid outlet unit discharges the bubble-containing liquid to the outside via a pressure reducing valve.

In the system for manufacturing bubble-containing liquid, the bubble-containing liquid pressurized in the storage space is discharged to the outside via the pressure reducing valve while the pressure is reduced. The inventor of the present invention found that the bubbles of the extracted bubble-containing liquid were concentrated by discharging the bubble-containing liquid pressurized and stored in the storage space while the pressure is reduced.

Accordingly, the system for manufacturing bubble-containing liquid can highly concentrate the bubbles in a relatively short time and the bubble-containing liquid of extremely high concentration can be stably and quickly extracted.

The system for manufacturing bubble-containing liquid can further have: a bubble-containing liquid supply unit for supplying the bubble-containing liquid; a bubble-containing liquid inlet for introducing the bubble-containing liquid supplied from the bubble-containing liquid supply unit into the storage space; a bubble-containing liquid outlet for discharging the bubble-containing liquid into the bubble outlet unit; and a recirculation outlet for recirculating the bubble-containing liquid stored in the storage space to the bubble-containing liquid supply unit. In addition, the storage space can have a predetermined height, the bubble-containing liquid inlet can introduce the bubble-containing liquid from an upper side of the storage space, the recirculation outlet recirculates the bubble-containing liquid stored in the mid-height area of the storage space, and the bubble-containing liquid outlet can discharge the bubble-containing liquid stored in the lower area of the storage space to the outside.

By adopting the above described system for manufacturing bubble-containing liquid, the bubble-containing liquid stored in the approximately mid-height area of the storage space is recirculated to the bubble-containing liquid supply unit via the recirculation outlet, the bubbles are further generated in the bubble-containing liquid supply unit, and the bubble-containing liquid are introduced in the storage space again via the bubble-containing liquid inlet. Thus, the circulation path is formed. The bubble-containing liquid is circulated and concentrated by using the above described circulation path.

Accordingly, in the above described system for manufacturing bubble-containing liquid, the bubbles in the storage space can be concentrated while the bubble-containing liquid of high concentration is discharged by pressurizing/depressurizing the bubble-containing liquid. Therefore, the bubble-containing liquid of high concentration can be continuously and stably extracted.

The bubble-containing liquid inlet can discharge the bubble-containing liquid in the horizontal direction. When the bubble-containing liquid stored in the storage unit receives the pressure downwardly, the bubbles having a larger particle diameter are also moved downward. Thus, it is impossible to concentrate only the bubbles having a small diameter. However, when the bubble-containing liquid is discharged in the horizontal direction, the bubble-containing liquid does not receive the discharge pressure vertically. Thus, the bubbles having a small particle diameter are not prevented from being concentrated at the bottom of the storage space.

In addition, the recirculation outlet can suck the bubble-containing liquid in the horizontal direction. By adopting the above described configuration, the bubble-containing liquid does not receive the suction pressure vertically. Thus, the bubbles having a small particle diameter are not prevented from being concentrated at the bottom of the storage space.

A system for manufacturing beverage of the present invention has: a homogenization device that homogenizes the beverage introduced in the homogenization device by crushing particles contained in the beverage; and a superfine bubble generating device that can generate the superfine bubbles in the beverage. The homogenization device has a micronizing unit that crashes and micronizes the particles. The gas is introduced in the micronizing unit together with the beverage. The micronizing unit crushes the gas contained in the liquid and generates the fine bubbles when the gas passes through the micronizing unit together with the beverage. The superfine bubble generating device generates the superfine bubbles from the fine bubbles generated in the micronizing unit.

In the above described system for manufacturing beverage, the gas introduced in the homogenization device together with the beverage is crushed by the micronizing unit together with the particles contained in the beverage. Thus, the fine bubbles are generated. The generated fine bubbles are converted into the superfine bubbles having a smaller diameter by the superfine bubble generating device. Accordingly, in the system for manufacturing the beverage of the present invention, the fine bubbles are generated by the homogenization device and converted into the superfine bubbles. Thus, the beverage can be sterilized efficiently while suppressing the deterioration of quality by the sterilization effect using the energy of generating the superfine bubbles.

Another method for manufacturing beverage of the present invention includes: a first degassing step of degassing the beverage to decrease the concentration of the dissolved gas; a nitrogen bubble generating step of generating superfine bubbles of nitrogen gas in the degassed beverage; and a heat sterilization step of performing a heat sterilization treatment of the beverage containing the superfine bubbles by the nitrogen gas.

By adopting the above described method for manufacturing beverage, after the concentration of the dissolved oxygen is decreased in the first degassing step, the nitrogen substitution is performed in the beverage by the superfine bubbles of the nitrogen gas. Because of this, deterioration of the flavor caused by the later performed heat sterilization can be suppressed and the sterilization effect can be maintained in the beverage since the superfine bubbles of the nitrogen gas are kept in the beverage.

The above described another method for manufacturing beverage can include a carbon dioxide bubble generating step of generating superfine bubbles of carbon dioxide gas in the degassed beverage; and a second degassing step of degassing the beverage to decrease the concentration of the dissolved gas between the degassing step and the nitrogen bubble generating step.

By adopting the above described method for manufacturing beverage, the superfine bubbles of the carbon dioxide gas are generated in the beverage in which the concentration of the dissolved oxygen is decreased by the first degassing step. Because of this, the heat-resistant bacteria can be sterilized by the sterilization effect of the carbon dioxide although it is difficult to sterilize the heat-resistant bacteria by the later performed heat sterilization step. Furthermore, deterioration of the flavor caused by the later performed heat sterilization step can be suppressed by replacing the superfine bubbles of the carbon dioxide with the superfine bubbles of the nitrogen.

The nitrogen bubble generating step or the carbon dioxide bubble generating step can include the processes of generating the fine bubbles and a process of irradiating the fine bubbles with the ultrasonic wave to convert the fine bubbles into the superfine bubbles. By adopting the above described method for manufacturing beverage, the beverage is sterilized by the sterilization effect of the ultrasonic wave by irradiating the beverage with the ultrasonic wave. In the sterilization of the ultrasonic wave, the heat-resistant bacteria can be sterilized although the heat-resistant bacteria cannot be sterilized by the heat sterilization. Thus, safety of the beverage can be improved.

The above described method for manufacturing beverage can include a heating step of heating the beverage before the first degassing step. By adopting the above described method for manufacturing beverage, the concentration of the dissolved oxygen in the beverage is decreased by heating the beverage before the first degassing step. Thus, the degassing can be efficiently performed in the first degassing step.

Furthermore, the beverage can be heated by applying high pressure to the beverage in the heating step. By adopting the above described method for manufacturing beverage, degassing performance can be improved in addition to the effect of physical sterilization obtained by applying high pressure.

The system for manufacturing beverage of the present invention has: a degassing unit for decreasing a concentration of a gas in a beverage; a superfine bubble generating unit for generating superfine bubbles in the beverage. The superfine bubble generating unit includes a storage unit for storing the beverage.

By adopting the above described system for manufacturing beverage, the degassing unit decreases the concentration of the gas in the beverage, and the superfine bubble generating unit generates the superfine bubbles in the beverage. Thus, the oxygen dissolved in the beverage can be replaced with a desired gas. In addition, the beverage containing the superfine bubbles is stored in the storage unit. Consequently, sterilization effect can be maintained in the beverage.

The degassing unit can be incorporated in a circulation path for circulating the beverage stored in the storage unit. By adopting the above described system for manufacturing beverage, the beverage stored in the storage unit passes through the degassing unit a plurality of times via the circulation path. Thus, the concentration of the gas in the beverage can be decreased to a desired value.

The above described system for manufacturing beverage can further have a homogenization unit for applying high pressure to the beverage to homogenize the particles contained in the beverage and the degassing unit can be provided downstream of the homogenization unit. By adopting the above described system for manufacturing beverage, the particles contained in the beverage are crushed and homogenized in the homogenization unit and the temperature of the beverage becomes high and the concentration of the gas in the beverage becomes low by applying high pressure. Thus, the degassing can be efficiently performed by the degassing unit provided downstream.

The superfine bubble generating unit can be configured to irradiate the bubble-containing beverage containing the fine bubbles with the ultrasonic wave to generate the superfine bubbles from the fine bubbles. By adopting the above described system for manufacturing beverage, the beverage is sterilized by the effect of physical sterilization of the ultrasonic wave by irradiating the beverage with the ultrasonic wave. In the physical sterilization, the heat-resistant bacteria can be sterilized although the heat-resistant bacteria cannot be sterilized by the heat sterilization. Thus, safety of the beverage can be improved.

The first bubble generation nozzle of the present invention has: a bottomed member formed in an approximately annular shape while an axial direction is aligned with a first direction; and a tubular member formed in an approximately annular shape and fitted to the bottomed member from the axial direction. The bottomed member has: a side wall portion formed in an annular shape to form a cylindrical space having a cylindrical shape; and a bottom portion that forms a first truncated conical space having a truncated conical shape continued from the side wall portion. The bottom portion of the bottomed member has a liquid supply hole having a cylindrical shape continued from the first truncated conical space. The first truncated conical space is continued from the cylindrical space at the bottom surface of the truncated conical shape and continued from the liquid supply hole at the truncated surface. The tubular member has: a first side peripheral portion formed in an annular shape to form a second truncated conical space having a truncated conical shape; and a second side peripheral portion formed in an annular shape to form a cylindrical jet hole having a larger diameter than the diameter of the liquid supply hole of the bottom portion. The first side peripheral portion of the tubular member has a plurality of recessed portions which is opened to the outside in the radial direction and spirally extended toward the first direction. The second truncated conical space of the tubular member is continued from the jet hole at the truncated surface. When the tubular member is fitted to the bottomed member, a gas-liquid mixing chamber is formed by the first truncated conical space, the cylindrical space and the second truncated conical space, the recessed portions are connected to the gas-liquid mixing chamber, the liquid is supplied to the gas-liquid mixing chamber via the liquid supply hole, and the gas is supplied to the gas-liquid mixing chamber via the recessed portions.

By adopting the above described configuration, the gas-liquid mixing chamber is formed into an approximately rugby-ball shape so that a diameter is reduced from both ends of a cylindrical shape by the first truncated conical space, the cylindrical space and the second truncated conical space. Thus, a circular cross-sectional space is formed over the entire the first direction. In the gas-liquid mixing chamber, the liquid is supplied from the liquid supply hole arranged on the center of one side of the gas-liquid mixing chamber, and the gas forming the spiral flow is supplied from the side periphery of the other side of the gas-liquid mixing chamber. Consequently, the gas-liquid mixture forms a screw-like loop flow in the gas-liquid mixing chamber. Accordingly, the passage of the loop flow in the gas-liquid mixing chamber is substantially extended. Thus, the gas-liquid mixture is stirred sufficiently and a large amount of fine bubbles is generated. Then, the bubble-containing liquid containing the fine bubbles is ejected from the jet hole.
Consequently, the fine bubbles can be generated and the bubble-containing liquid can be supplied efficiently.

The second side peripheral portion of the cylindrical member can further form a third truncated conical space having a truncated conical shape. In addition, the third truncated conical space can be continued to the jet hole of the second side peripheral portion at the truncated surface from an opposite side of the second truncated conical space. By adopting the above described configuration, the pressure of the gas-liquid mixture ejected from the jet hole is reduced. Thus, the fine bubbles can be generated efficiently.

The plurality of recessed portions provided on the first side peripheral portion can be formed at constant intervals in the circumferential direction. By adopting the above described configuration, a constant screw-like loop flow can be formed and the fine bubbles can be formed efficiently.

In the second bubble generation nozzle of the present invention, a gas-liquid mixing chamber comprised of a first truncated conical space formed in a truncated conical shape, a cylindrical space formed in a cylindrical shape continued from the first truncated conical space at the bottom surface of the truncated conical shape; and a second truncated conical space formed in a truncated conical shape continued from the cylindrical shape at the bottom surface from an opposite side of the first truncated conical space. The center axes of the first truncated conical space, the cylindrical space and the second truncated conical space are aligned with each other. The truncated surface of the second truncated conical space is larger than the truncated surface of the first truncated conical space. The liquid is supplied to the gas-liquid mixing chamber from the truncated surface of the first truncated conical space. The gas for forming spiral flow along a side periphery of the cylindrical space is supplied from a side periphery of the bottom surface of the second truncated conical space. The liquid and the gas are mixed in the gas-liquid mixing chamber to form a gas-liquid mixture and the gas-liquid mixture is ejected from the truncated surface of the second truncated conical space.

By adopting the above described configuration, the gas-liquid mixing chamber is formed into an approximately rugby-ball shape so that a diameter is reduced from both ends of a cylindrical shape by the first truncated conical space, the cylindrical space and the second truncated conical space. Thus, a circular cross-sectional space is formed over the entire the first direction. In the gas-liquid mixing chamber, the liquid is supplied from the liquid supply hole arranged on the center of one side of the gas-liquid mixing chamber, and the gas forming the spiral flow is supplied from the side periphery of the other side of the gas-liquid mixing chamber. Consequently, the gas-liquid mixture forms a screw-like loop flow in the gas-liquid mixing chamber. Accordingly, the passage of the loop flow in the gas-liquid mixing chamber is substantially extended. Thus, the gas-liquid mixture is stirred sufficiently and a large amount of fine bubbles is generated. Then, the bubble-containing liquid containing the fine bubbles is ejected from the jet hole. Consequently, the fine bubbles can be generated and the bubble-containing liquid can be supplied efficiently. In addition, since the gas inlet unit is inclined, the pressure of the liquid is not directly applied to the gas. Thus, the bubbles can be generated even when the pressure of the gas is low.

A plurality of gas supply paths can be formed spirally at constant intervals on an external side of the second truncated conical space to make the gas flow spirally around the center axis of the second truncated conical space, and the gas forming the spiral flow can be supplied along the outer periphery of the second truncated conical space from the outer periphery of the cylindrical space via the gas supply paths. By adopting the above described configuration, the gas supply paths supply the gas forming the spiral flow surely. Thus, the fine bubbles are generated and the bubble-containing liquid is supplied efficiently.

Furthermore, the second truncated conical space can have: a jet hole formed in a cylindrical shape continued from the second truncated conical space at the truncated surface of the truncated conical shape; and a third truncated conical space continued from the jet hole at the bottom surface from an opposite side of the second truncated conical space, and the bubble-containing liquid ejected from the truncated surface of the second truncated conical space can be ejected toward the bottom surface from the truncated surface of the third truncated conical space via the jet hole. By adopting the above described configuration, the pressure of the gas-liquid mixture ejected from the jet hole is reduced. Thus, the fine bubbles can be generated efficiently.

This patent specification is based on Japanese patent application, No. 2014-64892 filed by the inventor of the present invention on March 26, 2014 in Japan, Japanese patent application, No. 2016-205588 filed by the inventor of the present invention on October 19, 2016 in Japan, Japanese patent application, No. 2016-212335 filed by the inventor of the present invention on October 28, 2016 in Japan, Japanese patent application, No. 2016-233081 filed by the inventor of the present invention on November 30, 2016 in Japan, Japanese patent application, No. 2016-248819 filed by the inventor of the present invention on December 22, 2016 in Japan, Japanese patent application, No. 2017-4694 filed by the inventor of the present invention on January 13, 2017 in Japan, and Japanese patent application, No. 2017-19136 filed by the inventor of the present invention on February 3, 2017 in Japan, the entire contents of which are incorporated by reference herein.

The above described explanations of the specific embodiment of the present invention are provided for showing an example. The explanations are not intended to cover the present invention exhaustively and not intended to limit the present invention as the described embodiment. It is obvious for a person skilled in the art to modify and change the embodiment variously referring to the above described explanations.

### [Industrial Applicability]

The system for manufacturing bubble-containing liquid and the method for manufacturing bubble-containing liquid of the present invention are industrially useful since the liquid containing superfine bubbles having a small and constant particle diameter of high concentration can be efficiently manufactured.

### [Description of the Reference Numerals]

100, 200, 300 system for manufacturing bubble-containing liquid
110, 210 homogenization unit
111 micronizing unit
120, 220, 320 superfine bubble generating unit
30, 130, 230, 330 bubble generating unit
31, 131, 231, 331 bubble generator (bubble generation nozzle)
140, 240, 340: bubble collapsing unit
141 passage
142 outer body
143 ultrasonic vibrators
150, 250, 350 storage unit
153 pressure reducing valve
160, 260 degassing unit
r1 first circulation path
r2 second circulation path
r3 third circulation path
r4 fourth circulation path

## Claims

1. A method for manufacturing bubble-containing liquid using a system for manufacturing bubble-containing liquid,
the system comprising:
a bubble generating unit that generates fine bubbles in a liquid;
a bubble collapsing unit that is connected to the bubble generating unit to collapse the fine bubbles contained in the bubble-containing liquid supplied from the bubble generating unit by making the bubble-containing liquid pass through the bubble collapsing unit and irradiating the bubble-containing liquid with ultrasonic wave; and
a storage unit that is connected to the bubble collapsing unit to store the bubble-containing liquid supplied from the bubble collapsing unit,
the method comprising:
a bubble generating step of generating the fine bubbles in the liquid by the bubble generating unit;
a bubble collapsing step of generating superfine bubbles by forming an ultrasonic field by the bubble collapsing unit to collapse the fine bubbles contained in the liquid; and
a storage step of storing the bubble-containing liquid containing the superfine bubbles by the storage unit.

2. The method for manufacturing bubble-containing liquid according to claim 1, wherein
the system for manufacturing bubble-containing liquid has a circulation path that connects the bubble generating unit, the bubble collapsing unit and the storage unit, and
the bubble generating step, the bubble collapsing step and the storage step are repeated a plurality of times by using the circulation path.

3. The method for manufacturing bubble-containing liquid according to claim 2, wherein
the system for manufacturing bubble-containing liquid has a homogenization unit that homogenizes a beverage,
a bubble-containing beverage is generated as the bubble-containing liquid in the bubble generating step,
the beverage is introduced as the liquid, and
the method contains a homogenization step of homogenizing the bubble-containing beverage or the bubble-containing liquid by introducing the bubble-containing beverage or the bubble-containing liquid into the homogenization unit.

4. The method for manufacturing bubble-containing liquid according to claim 3, wherein
the homogenization unit is incorporated in the circulation path, and
the homogenization step is performed after the bubble generating step and before the bubble collapsing step.

5. The method for manufacturing bubble-containing liquid according to claim 3 or 4, wherein
the system for manufacturing bubble-containing liquid has a degassing unit that degasses the liquid,
the method contains a degassing step of degassing oxygen dissolved in the bubble-containing liquid, and
the fine bubbles of nitrogen gas are generated in the beverage in the bubble generating step after the degassing step.

6. The method for manufacturing bubble-containing liquid according to claim 5, wherein
the degassing step is performed immediately after the homogenization step.

7. The method for manufacturing bubble-containing liquid according to any one of claims 1 to 6, wherein
the bubble collapsing unit has: a passage for passing the bubble-containing liquid; an outer body for covering a periphery of the passage; and a plurality of ultrasonic vibrators for irradiating the passage with the ultrasonic wave from an outside to an inside of the passage so that directions of irradiating the passage are different among the ultrasonic vibrators,
a propagation liquid for propagating the ultrasonic wave is filled between the passage and the outer body,
the ultrasonic vibrators are attached to an external side of the outer body,
the bubble collapsing unit is arranged so that the passage is horizontally directed,
the method contains a cooling step for introducing the propagation liquid from a lower side of the outer body and discharging the propagation liquid from an upper side of the outer body, and
the cooling step is performed simultaneously with the bubble collapsing step.

8. A system for manufacturing bubble-containing liquid, comprising:
a bubble generating unit that generates fine bubbles in a liquid;
a bubble collapsing unit that is connected to the bubble generating unit to collapse the fine bubbles contained in the bubble-containing liquid supplied from the bubble generating unit by making the bubble-containing liquid pass through the bubble collapsing unit and irradiating the bubble-containing liquid with ultrasonic wave;
a storage unit that is connected to the bubble collapsing unit to store the bubble-containing liquid supplied from the bubble collapsing unit; and
a circulation path that is incorporated with the bubble generating unit, the bubble collapsing unit and the storage unit.

9. The system for manufacturing bubble-containing liquid according to claim 8, further comprising:
a liquid inlet unit that introduces a beverage as the liquid; and
a homogenization unit that homogenizes the beverage by dispersing particles contained in the beverage, wherein
the beverage containing the fine bubbles or bubbles is introduced in the homogenization unit to homogenize the particles and micronize the fine bubbles or the bubbles.

10. The system for manufacturing bubble-containing liquid according to claim 8 or claim 9, further comprising:
a degassing unit that separates gas component from the bubble-containing liquid or the liquid containing the bubbles.

11. The system for manufacturing bubble-containing liquid according to claim 10, wherein
the degassing unit is connected immediately after the homogenization unit.

12. The system for manufacturing bubble-containing liquid according to any one of claims 8 to 11, wherein
the storage unit has a pressure reducing valve, and
the bubble-containing liquid stored in the storage unit is highly pressurized and configured to be extracted via the pressure reducing valve.

13. The system for manufacturing bubble-containing liquid according to any one of claims 8 to 12, wherein
the bubble collapsing unit has: a passage for passing the bubble-containing liquid; an outer body for covering a periphery of the passage; and a plurality of ultrasonic vibrators for irradiating the passage with the ultrasonic wave from an outside to an inside of the passage so that directions of irradiating the passage are different among the ultrasonic vibrators,
a propagation liquid for propagating the ultrasonic wave is filled between the passage and the outer body,
the ultrasonic vibrators are attached to an external side of the outer body,
the bubble collapsing unit is arranged so that the passage is horizontally directed, and
the propagation liquid is continuously introduced from a lower side of the outer body and continuously discharged from an upper side of the outer body.

14. The system for manufacturing bubble-containing liquid according to any one of claims 8 to 13, wherein
the bubble generating unit has:
a gas-liquid mixing chamber for generating a loop flow, the gas-liquid mixing chamber having a space with a circular cross-section;
a liquid supply hole formed on one end side of the gas-liquid mixing chamber to supply pressurized fluid to the gas-liquid mixing chamber;
a gas supply hole for flowing gas;
a gas supply path formed on the other end side of the gas-liquid mixing chamber to supply the gas flowing from the gas supply hole toward the one end side of the gas-liquid mixing chamber along a peripheral surface of the space of the gas-liquid mixing chamber while making the gas flow spirally around a center axis of the liquid supply hole; and
a jet hole formed on the other end side of the gas-liquid mixing chamber to eject the bubble-containing liquid formed by mixing the liquid and the gas in the gas-liquid mixing chamber, a center axis of the jet hole being aligned with the center axis of the liquid supply hole, a diameter of the jet hole being larger than a diameter of the liquid supply hole.
